(19) Europäisches Patentamt / European Patent Office / Office européen des brevets

(11) **EP 2 770 413 A2**

(12) **EUROPEAN PATENT APPLICATION**

(43) Date of publication:
**27.08.2014 Bulletin 2014/35**

(51) Int Cl.:
*G06F 3/0484* (2013.01)    *G06F 3/0481* (2013.01)

(21) Application number: **14156168.8**

(22) Date of filing: **21.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.02.2013 KR 20130019458**
**15.04.2013 US 201361811920 P**
**07.01.2014 KR 20140001943**

(71) Applicant: **Samsung Electronics Co., Ltd.**
**Suwon-si Gyeonggi-do 443-742 (KR)**

(72) Inventors:
• **Jeong, Seog-Hee**
**443-742 Gyeonggi-do (KR)**
• **Shin, Haeng-Jin**
**443-742 Gyeonggi-do (KR)**
• **Lim, Min-Kyung**
**443-742 Gyeonggi-do (KR)**
• **Choi, Young-Keun**
**443-742 Gyeonggi-do (KR)**
• **Hwang,Hyung-Suk**
**443-742 Gyeonggi-do (KR)**

(74) Representative: **Nederlandsch Octrooibureau**
**P.O. Box 29720**
**2502 LS The Hague (NL)**

(54) **An apparatus for providing a cursor in electronic devices and a method thereof**

(57)    An apparatus is provided including a controller configured to: detect whether a displayed object is an icon; detect whether a cursor is located inside an area surrounding the displayed object, when the displayed object is the icon; move the cursor to a first location within the displayed object, when the cursor is located inside the area; and hold the cursor still after the cursor is moved to the first location, wherein the cursor is held still for a waiting time period.

FIG.1

EP 2 770 413 A2

**Description**

TECHNICAL FIELD

The present disclosure relates generally to electronic devices, and more specifically, to providing a cursor in electronic devices.

BACKGROUND

Electronic devices, such as smart phones, tablet computers, and set-top boxes are constantly evolving. Some of these electronic devices provide a mouse cursor for allowing users to select displayed objects. However, when the objects are small in size, selecting them with the mouse cursor may be difficult. Accordingly, the need exists for new techniques for providing a cursor in electronic devices that facilitate the selection of small objects with a mouse cursor..

**SUMMARY**

The present disclosure addresses this need.
Accordingly, an aspect of the present disclosure is to provide an apparatus and method for allowing a user to conveniently use a mouse cursor in an electronic device.
Another aspect of the present disclosure is to provide an apparatus and method for providing a mouse cursor in an electronic device, the mouse cursor allowing a user to easily select a predetermined location on an indicator in an object including the indicator.
In accordance with an aspect of the present disclosure, there is provided an apparatus for providing a mouse cursor in an electronic device, including a controller configured to determine whether a displayed object is an icon based on object property information of the displayed object. The controller determines whether a mouse cursor is in an object area of the displayed object if the displayed object is the icon, and moves the mouse cursor to a reference location of the object if the mouse cursor is in the object area of the displayed object. The controller counts a predetermined waiting time period, determines whether a request for moving the mouse cursor is received, and determines whether the predetermined waiting time period has elapsed if the request for moving the mouse cursor has been received. If the predetermined waiting time period has not elapsed, the controller holds the mouse cursor at the reference location by ignoring the request for moving the mouse cursor.
In accordance with another aspect of the present disclosure, there is provided an apparatus for providing a mouse cursor in an electronic device, including a controller configured to determine whether a displayed object is an object including an indicator based on object property information of the displayed object. The controller determines whether a mouse cursor is in an object area of the displayed object if the displayed object is the object including the indicator, and moves the mouse cursor from a first location to a predetermined location on the indicator if the mouse cursor is in the object area of the displayed object. The controller determines whether a request for moving the mouse cursor is received, compares a movement distance of the mouse cursor according to the request for moving the mouse cursor to a reference movement distance if the request for moving the mouse cursor has been received. The controller moves the mouse cursor along the indicator if it is determined that the movement distance of the mouse cursor is shorter than the reference movement distance based on the result of the comparison.
In accordance with another aspect of the present disclosure, there is provided an electronic device including: a first communication unit configured to communicate with an external input device; a second communication unit configured to communicate with an external display device; and a controller connected to the first communication unit and the second communication unit. The controller receives information representing at least one of orientation of the external input device and a change in the orientation from the first communication unit. The controller transmits a signal for controlling a cursor that is displayed on the external display device, to the external display device, through the second communication unit, the signal generated based on the information.
In accordance with another aspect of the present disclosure, there is provided a method for providing a mouse cursor in an electronic device, including: determining whether a displayed object is an icon based on object property information of the displayed object. If the displayed object is the icon, it is determined whether a mouse cursor is in an object area of the displayed object, and the mouse cursor is moved to a reference location of the object if the mouse cursor is in the object area of the displayed object. Then, a predetermined waiting time period is counted, and it is determined whether a request for moving the mouse cursor is received. If the request for moving the mouse cursor has been received, it is determined whether the predetermined waiting time period has elapsed. If the predetermined waiting time period has not elapsed, the mouse cursor is hold at the reference location by ignoring the request for moving the mouse cursor.
In accordance with another aspect of the present disclosure, there is provided a method for providing a mouse cursor in an electronic device, including: determining whether a displayed object is an object including an indicator based on object property information of the displayed object. If the displayed object is the object including the indicator, it is determined whether a mouse cursor is in an object area of the displayed object, and the mouse cursor is moved from a first location to a predetermined location on the indicator if the mouse cursor is in the object area of the displayed object. It is determined whether a request for moving the mouse cursor is received, and a movement distance of the mouse cursor according to the request for moving the mouse cursor is compared to a reference movement distance if the request for moving the mouse cursor has been received. If it is determined that the movement distance of the mouse cursor is shorter than the reference movement distance based on the result of the comparison, the mouse cursor is moved along the indicator.

In accordance with another aspect of the present disclosure, there is provided a method for providing a mouse cursor in an electronic device, including: determining whether the mouse cursor is in an area of a predetermined object displayed on a display unit; and changing a display of the predetermined object if the mouse cursor is in the area of the predetermined object.

In accordance with another aspect of the present disclosure, there is provided a method of providing a mouse cursor in an electronic device, including: determining whether the mouse cursor is in an area of a predetermined object displayed on a display unit; and changing a display of the mouse cursor if the mouse cursor is in the area of the predetermined object.

Other aspects, advantages, and salient features of the disclosure will become apparent to those skilled in the art from the attached clauses, the attached claims, and the following detailed description, which, taken in conjunction with the annexed drawings, discloses exemplary aspects of the disclosure.

## BRIEF DESCRIPTION OF THE DRAWINGS

The above and other aspects, features and advantages of certain exemplary aspects of the present disclosure will be more apparent from the following description taken in conjunction with the accompanying drawings, in which:

FIG. 1 is a diagram illustrating an example of a technique for moving a mouse cursor in an electronic device according to aspects of the present disclosure.

FIG. 2 is a diagram illustrating another example of a technique for moving a mouse cursor in an electronic device according to aspects of the present disclosure.

FIG. 3 is a diagram illustrating yet another example of a technique for moving a mouse cursor in an electronic device according to aspects of the present disclosure

FIG. 4 is a block diagram illustrating an example of an electronic device according to aspects of the present disclosure.

FIG. 5 is a block diagram illustrating an example of a system according to aspects of the present disclosure.

FIG. 6 is a block diagram illustrating an example of an electronic device that provides an air mouse function, according to aspects of the present disclosure.

FIG. 7 is a block diagram illustrating an example of an electronic device according to aspects of the present disclosure.

FIG. 8 is a flowchart of an example of a process according to aspects of the disclosure.

FIG. 9 is a flowchart of an example of another process, according to aspects of the disclosure.

FIG. 10 is a diagram illustrating yet another example of a technique for moving a mouse cursor in an electronic device according to aspects of the present disclosure.

FIG. 11 is a diagram illustrating yet another example of a technique for moving a mouse cursor in an electronic device according to aspects of the present disclosure.

FIG. 12 is a diagram illustrating yet another example of a technique for moving a mouse cursor in an electronic device according to aspects of the present disclosure.

FIG. 13 is a diagram illustrating yet another example of a technique for moving a mouse cursor in an electronic device according to aspects of the present disclosure.

FIG. 14 is a diagram illustrating yet another example of a technique for moving a mouse cursor in an electronic device according to aspects of the present disclosure.

FIG. 15 is a flowchart of an example of yet another process, according to aspects of the disclosure.

FIG. 16 is a flowchart of an example of yet another process, according to aspects of the disclosure.

FIG. 17 is a flowchart of an example of yet another process, according to aspects of the disclosure.

FIG. 18 is a flowchart of an example of yet another process, according to aspects of the disclosure.

FIG. 19 is a flowchart of an example of yet another process, according to aspects of the disclosure.

Throughout the drawings, like reference numerals will be understood to refer to like parts, components, and structures.

## DETAILED DESCRIPTION

The following description with reference to the accompanying drawings is provided to assist in a comprehensive understanding of exemplary aspects of the disclosure as defined by the claims and their equivalents. It includes various specific details to assist in that understanding but these are to be regarded as merely exemplary. Accordingly, those skilled in the art will recognize that various changes and modifications of the aspects described herein can be made without departing from the scope of the disclosure. In addition, descriptions of well-known functions and constructions may be omitted for clarity and conciseness.

An electronic device according to various aspects of the present disclosure may include any suitable type of mobile and non-mobile device. Examples of non-mobile devices may include desktop computers and other similar devices, where examples of mobile devices may include mobile terminals, such as video phones, mobile phones, smart phones, International Mobile Telecommunication 2000 (IMT-2000) terminals, a Wideband Code Division Multiple Access (WCDMA) terminals, a Universal Mobile Telecommunication Service (UMTS) terminals, a Personal Digital Assistants (PDAs), Portable Multimedia Player (PMPs), a Digital Multimedia Broadcasting (DMB) terminals, E-Books, Notebooks, Tablets, or digital cameras.

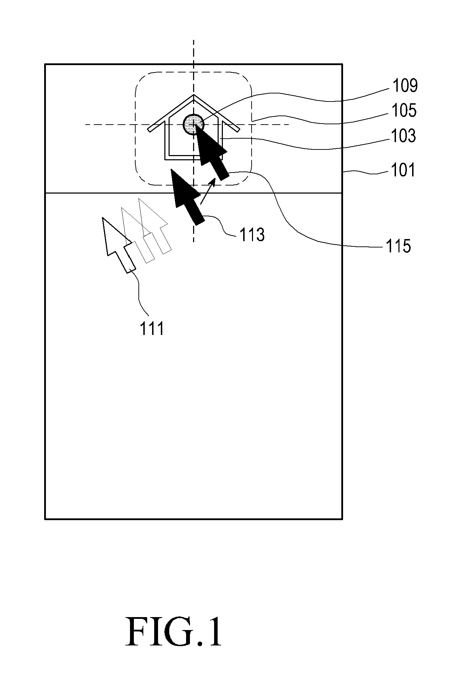

FIG. 1 is a diagram illustrating an example of a technique for moving a mouse cursor in an electronic device according to aspects of the present disclosure. As shown on a first screen 101, if a mouse cursor is moved by a user from a location 111 to a location 113 which is in an object area 105 after a object 103 is displayed, the corresponding electronic device moves the mouse cursor from the location 113 to a location 115, and then halts the movement of the mouse cursor for a predetermined waiting time period.

According to the example of FIG. 1, the object area 105 may be a predetermined area including the object 103 (for example, an icon). In addition, as illustrated, the object area 105 may include some of the object's surroundings. Furthermore, the location 115 may be determined based on a reference location 109. The reference location 109 may be the center (or another point in a central portion) of the object 103. And still furthermore, the predetermined waiting time period is designated in advance.

In operation, if the user requests movement of the mouse cursor before the predetermined waiting time period elapses, the electronic device ignores the request from the user. By contrast, if the user requests movement of the mouse cursor after the predetermined waiting time period has elapsed, the electronic device moves the mouse cursor to a location requested by the user.

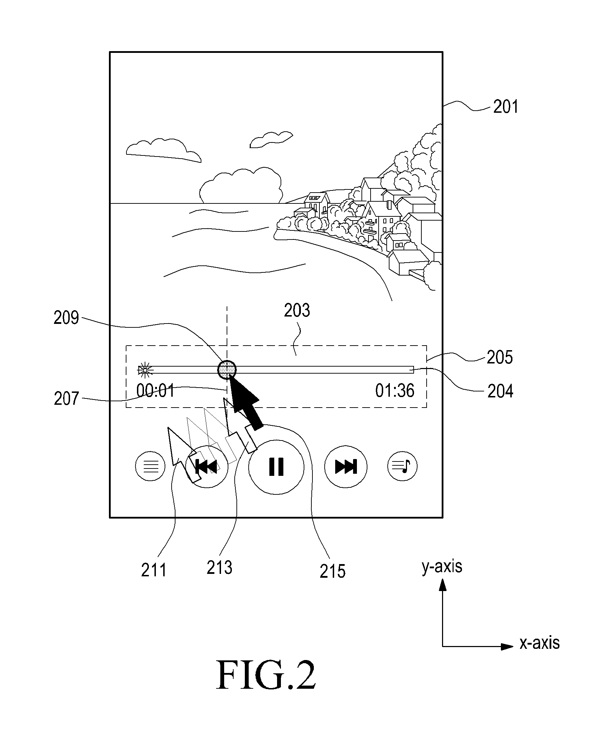

FIG. 2 is a diagram illustrating another example of a technique for moving a mouse cursor in an electronic device according to aspects of the present disclosure. As shown on a screen 201, if a mouse cursor is moved by a user from a location 211 to a location 213, which is in an object area 205, after an object 203 is displayed, the corresponding electronic device moves the mouse cursor from the location 213 to a location 215.

According to the example of FIG. 2, the object 203 includes an indicator 204 that extends in the direction of the x-axis. From the exemplary figures it will be clear to a skilled person that path indicator can be a graphical user element such as a slider control for inputting or manipulating a position. The indicator may be a path indicator indicating a path. For example, the indicator may be part of: a progress bar of a video player, a scroll bar of a word processor, a gauge, a slider, and/or part of any other suitable user interface component. The object area 205 may be a predetermined area including the object203. The location 215 may be determined based on a location 209. In some implementations, the location 209 may be a location situated on the indicator 204 that is the closest to the location 213. Additionally or alternatively, in some implementations, the location 209 may lie on the intersection of the indicator 204 and a y-axis movement reference line 207 of the mouse cursor.

For example, if the user attempts to move the mouse cursor from a current location to a new location, the electronic device may compare the distance between the current location and the new location (hereinafter "movement distance") to a reference movement distance. The electronic device may determine whether the movement distance of the mouse cursor is equal to or longer than the reference movement distance based on the result of the comparison. If the movement distance of the mouse cursor is equal to or longer than the reference movement distance, the electronic device moves the mouse cursor to a location requested by the user. By contrast, if the movement distance of the mouse cursor is shorter than the reference movement distance, the electronic device may move the mouse cursor along the indicator 204.

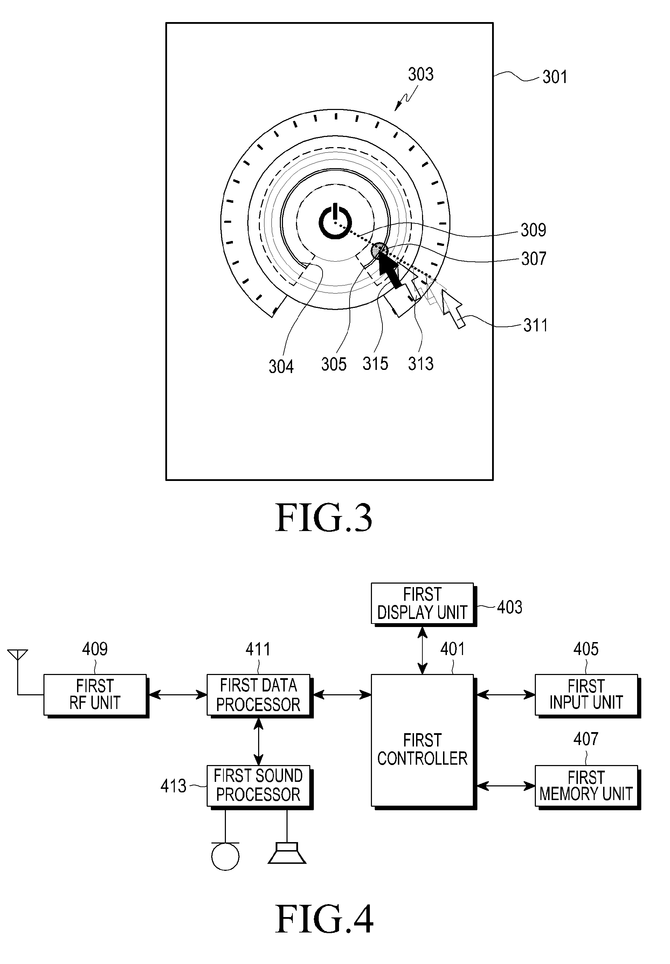

FIG. 3 is a diagram illustrating yet another example of a technique for moving a mouse cursor in an electronic device according to aspects of the present disclosure. As shown on a screen 301, if a mouse cursor is moved by a user from a location 311 to a location 313, which is in an object area 305, after an object 303 is displayed, the corresponding electronic device may move the mouse cursor from the location 313 to a location 315. The object 303, as illustrated, may include a trajectory path indicator 304 along which the mouse cursor can move. As noted above, the indicator can be part of: a slider, a progress bar, a scroll bar, a gauge, and/or part of any other suitable user interface component. Thus, the object 303 may include a progress bar, a slider, a scroll bar, a gauge, and/or any other suitable user interface component.

According to the example of FIG. 3, the object area 305 may be a predetermined area including the object 303. Furthermore, the location 315 may be determined based on a location 307. The location 307 may be a location on the indicator 304 (or any other specific component of the object 303) that is the closest to the location 313. Additionally or alternatively, in some implementations, the location 307 may be an intersection of the indicator 304 and a diagonal movement reference line 309 with respect to the mouse cursor..

In operation, if the user requests movement of the mouse cursor, the electronic device may compare a movement distance of the mouse cursor to a reference movement distance. The electronic device may determine whether the movement distance of the mouse cursor is equal to or longer than the reference movement distance based on the result of the comparison. If the movement distance of the mouse cursor is equal to or longer than the reference movement distance, the electronic device may move the mouse cursor to a location requested by the user. By contrast, if the movement distance of the mouse cursor is shorter than the reference movement distance, the electronic device may move the mouse cursor along the trajectory object 303.

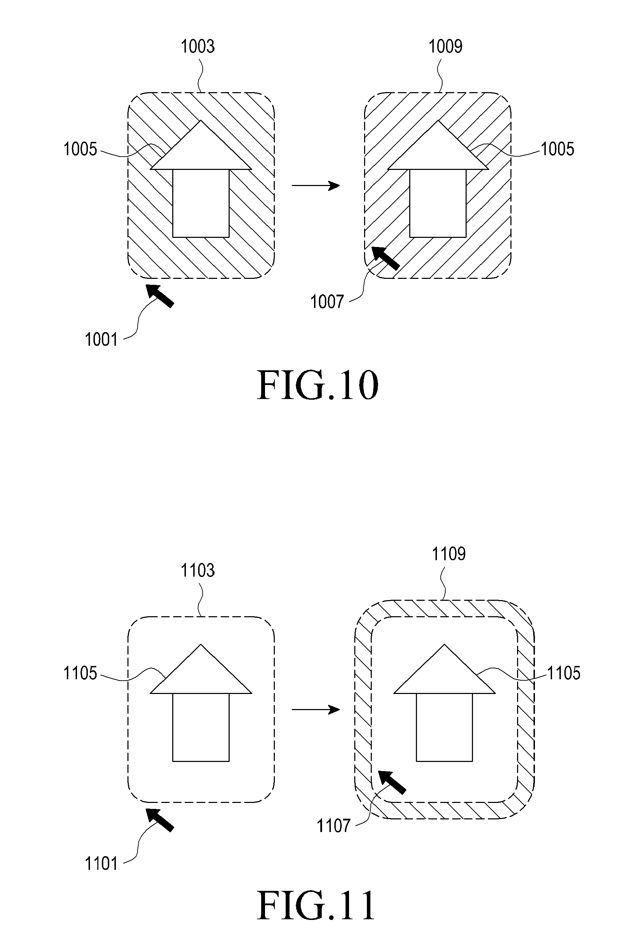

FIG. 10 is a diagram illustrating yet another example of a technique for moving a mouse cursor in an electronic device according to aspects of the present disclosure. As illustrated, if a mouse cursor is moved from a location 1001 to a location 1007, which is in an object area 1003 where an object 1005 is displayed, the corresponding electronic device may display an object area 1009 by changing the color (or any other suitable characteristic) of the object area 1003. Herein, the object area 1003 or the object area 1009 may be a predetermined area including the object 1005. Thereafter, if the mouse cursor is moved out of the object area 1009, the electronic device may change the color of the object area 1009 to the color of the object area 1003 or another color.

FIG. 11 is a diagram illustrating yet another example of a technique for moving a mouse cursor in an electronic device according to aspects of the present disclosure. As illustrated, a mouse cursor is moved from a location 1101 to a location 1107, which is in an object area 1103, after a object 1105 is displayed. In response to the mouse cursor being moved, the corresponding electronic device may display an object area 1109, in place of the object area 1103, by enlarging the size (or changing another characteristic) of the object area 1103. Thereafter, if the mouse cursor is moved out of the object area 1109, the electronic device may reduce the size of the object area 1109 to the size of the object area 1103. Herein, the object area 1103 or the object area 1109 may be a predetermined area including the object 1105.

FIGS. 10 and 11 relate to examples of changing a color or a size of an object area based on whether a mouse cursor is located inside the object area. However, it is also possible to change another characteristic of the object area. For example, the electronic device may change a pattern or a texture of the object area when a mouse cursor is moved in or out of the object area. However, these are exemplary embodiments, and other embodiments are also possible.

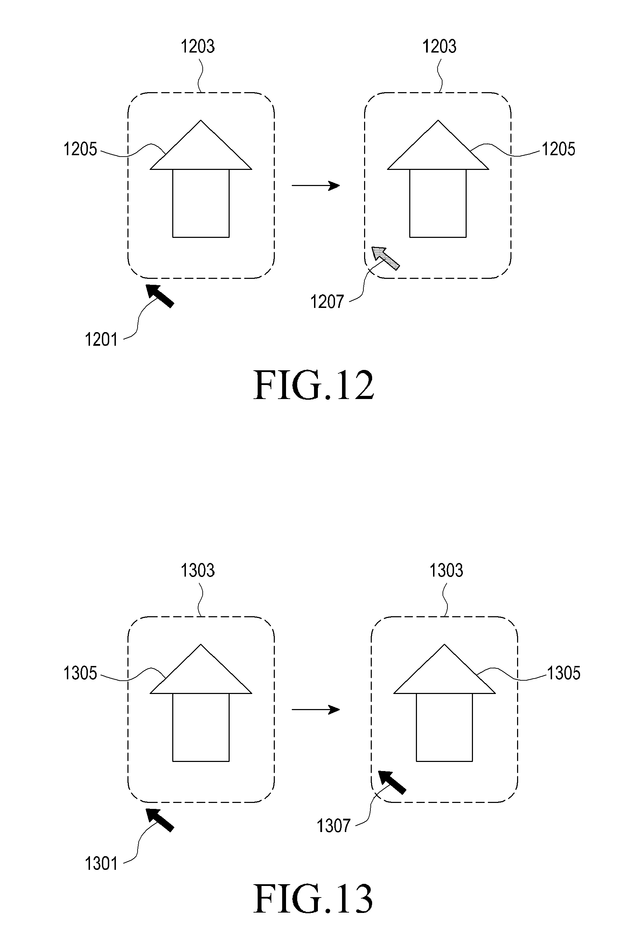

FIG. 12 is a diagram illustrating yet another example of a technique for moving a mouse cursor in an electronic device according to aspects of the present disclosure. As illustrated, if a mouse cursor is moved from a location 1201 to a location 1207, which is in an object area 1203, after an object 1205 is displayed, the corresponding electronic device may change the color (and/or any other suitable characteristic of the appearance) of the mouse cursor. The object area 1203 may be a predetermined area including the object 1205. Thereafter, if the mouse cursor is moved out of the object area 1203, the electronic device may restore the color of the mouse cursor to its original color. The electronic device may change the color of the mouse cursor to another color than that of the mouse cursor before the mouse cursor is moved in the object area 1203.

FIG. 12 relates to an example of changing a color of a mouse cursor based on whether the mouse cursor is located in an object area. However, it is also possible to change another characteristic of the mouse cursor. For example, the electronic device may change a pattern, a texture, or a size of a mouse cursor when the mouse cursor has been moved in or out of an object area.

However, these are exemplary embodiments, and other embodiments are also possible.

FIG. 13 is a diagram illustrating yet another example of a technique for moving a mouse cursor in an electronic device according to aspects of the present disclosure. As illustrated, if a mouse cursor is moved from a location 1301 to a location 1307, which is in an object area 1303 where an object 1305 is displayed, the electronic device may change a movement velocity of the mouse cursor. For example, the electronic device may reduce a movement velocity of the mouse cursor to a predetermined velocity, when the mouse cursor enters the object area 1303. More specifically, in one example, the electronic device may set the movement velocity of the mouse cursor to "0" for a predetermined waiting time period in order to hold still the mouse cursor for the predetermined waiting time period. After the predetermined waiting period passes, the electronic device may increase the velocity of the mouse cursor to a value that is greater than "0." In some implementations, the velocity may be increased to a value that is less than (or greater than) the velocity of the mouse cursor prior to the mouse cursor entering the object area 1303. Furthermore, in some implementations, the object area 1303 may be a predetermined area including the object 1305.

Additionally or alternatively, in some implementations, when the mouse cursor exits the object area 1303, the electronic device may change the movement velocity of the mouse cursor to its original movement velocity. More particularly, in one example, the electronic device may change the movement velocity (or any other suitable characteristic of the movement) of the mouse cursor to a reference velocity. For example, the reference velocity may be the velocity of the mouse cursor before the mouse cursor is moved in the object area 1303. If the predetermined waiting time period has elapsed, the electronic device may set the movement velocity of the mouse cursor to the reference velocity. If the mouse cursor is moved out of the object area 1303 by the user, the electronic device may move the mouse cursor at the reference velocity.

FIGS. 12 and 13 relate to examples of changing a color or a movement velocity of a mouse cursor based on whether a mouse cursor is located inside an object area. However, it is also possible to change another characteristic of the mouse cursor according to whether the mouse cursor exits or enters the object area. For example, the electronic device may change a pattern, a texture, or a size of a mouse cursor when the mouse cursor has been moved in or out of an object area. However, these are exemplary aspects, and other aspects are also possible.

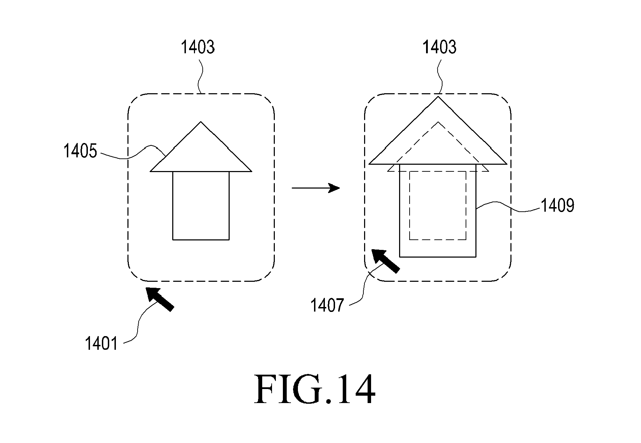

FIG. 14 is a diagram illustrating yet another example of a technique for moving a mouse cursor in an electronic device according to aspects of the present disclosure. As illustrated, if a mouse cursor is moved from a location 1401 to a location 1407, which is in an object area 1403, after an object 1405 is displayed, the corresponding electronic device may display an object 1409 by enlarging the size (or changing another characteristic) of the object 1405. In some implementations, the object area 1403 may be a predetermined area including the object 1405 or the object 1409. When the mouse cursor is moved out of the object area 1403, the electronic device may reduce the size of the object 1409 to the size of the object 1405. Or alternatively, the electronic device may change the size of the object 1409 to another size that is different than the size of the object 1405.

FIG. 14 relates to an example of changing the size of an object (e.g., an icon) based on whether a mouse cursor is located inside an object area corresponding to the object. However, it is also possible to change another characteristic of the object when the mouse cursor enters or exits the object area. For example, the electronic device may change a pattern, a texture, or a size of an object when the mouse cursor moves in or out of the corresponding object area.

FIG. 4 is a block diagram illustrating an example of an electronic device according to aspects of the present disclosure. As illustrated, the electronic device may include a first controller 401, a first display unit 403, a first input unit 405, a first memory unit 407, a first Radio Frequency (RF) unit 409, a first data processor 411, and a first sound processor 413.

The above-mentioned components will be described in detail as follows. The first RF unit 409 performs a wireless communication function of the electronic device. In more detail, the first RF unit 409 may include a radio transmitter for up-converting the frequency of a signal to be transmitted and amplifying the signal to be transmitted, a radio receiver for low-noise amplifying a received signal and down-converting the frequency of the received signal, etc.

The first data processor 411 includes a transmitter for encoding and modulating a signal to be transmitted, a receiver for demodulating and decoding a received signal, etc. Here, the first data processor 411 may be comprised of a modem and a codec, and the codec may include a data codec for processing packet data, etc. and an audio codec for processing audio signals, such as voice, etc.

The first sound processor 413 performs a function of reproducing a reception audio signal output from the first data processor 411 through a speaker, or of transmitting a transmission audio signal received from a microphone to the first data processor 411.

The first input unit 405 may include keys for allowing a user to input numerical and text information, and functional keys for setting various functions.

The first display unit 403 displays an image signal on a screen, and displays data requested to be output by the first controller 401.

If the first display unit 403 is implemented as a capacitive-type or resistive-type touch screen, the first input unit 405 may include a minimum number of predetermined keys, and the first display unit 403 may provide a part of the key input functions of the first input unit 405.

The first memory unit 407 may include any suitable type of volatile and/or non-volatile memory, such a Read Only Memory (ROM), a Random Access Memory (RAM), a flash memory, a Solid State Drive (SSD), a Hard Drive (HD). In some implementations, the first memory unit 407 may include a program memory and a data memory. The program memory stores booting and operating system (hereinafter, referred to as "OS") for controlling the general operations of the electronic device, and the data memory stores various kinds of data created when the electronic device operates.

The electronic device may include a short-range communication unit (not shown) and a High Definition Multimedia Interface (HDMI) communication unit (not shown). The short-range communication unit may support Bluetooth, and communicate with an external input device. The external input device may be a keyboard or a mouse. The HDMI communication unit may communicate with an external display device. The external display device may be a TeleVision (TV) or a monitor.

The first controller 401 may include one or more of a processor (e.g., an ARM-based processor, an x86-based processor, a MIPS-based processor), an Application Specific Integrated Circuit (ASIC), a Field-Programmable Gate Array (FPGA), and/or any other suitable type of processing circuitry. In operation, the first controller 401 performs a function of controlling overall operations of the electronic device. Particularly, the first controller 401 may move a mouse cursor to a predetermined location in a displayed object according to the property of the object.

In more detail, according to aspects of the disclosure, the first controller 401 may determine whether there is a displayed object. If it is determined that there is a displayed object, the first controller 401 may search for and analyze object property information corresponding to the displayed object to thus determine whether the object is an icon or an object including an indicator. The indicator may refer to a visual indication of a quantity or a position. For example, in some implementations, the indicator may refer to at least one of "an indication of a progress of playback of a content item (e.g. a media playback progress bar)," "an indication of a position within a content item (e.g., a document scrollbar). Herein, the object property information is information representing one or more properties of the object. If the object includes an indicator, the object property information includes indicator information related to the indicator, and the indicator information may identify one or more characteristics of the indicator. For example, the indicator information may identify coordinates of the indicator and a reference movement distance corresponding to the indicator. If the object property information includes indicator information, the first controller 401 may determine that the object is an object including an indicator, and if the object property information includes no indicator information, the first controller 401 may determine that the object is an icon.

If the first controller 401 determines that the object is an icon, the first controller 401 may determine whether a request for moving a mouse cursor is received from a user. If a request for moving a mouse cursor has been received from a user, the first controller 401 moves the mouse cursor according to the request, and then checks the current location of the mouse cursor. Then, the first controller 401 may determine whether the mouse cursor is in an object area of the icon, based on the current location of the mouse cursor. If the first controller 401 determines that the mouse cursor is in the object area of the icon, the first controller 401 moves the mouse cursor from its current location to a reference location in the icon.

Herein, the object area of the icon is a predetermined area including the icon. Also, the reference location is a predetermined location in the icon. For example, the reference location may be the central point of the icon.

Also, the first controller 401 may count a predetermined waiting time period with respect to movement of the mouse cursor. The predetermined waiting time period may have been designated in advance in order to hold the mouse cursor. Thereafter, the first controller 401 may determine whether a request for moving the mouse cursor is received from a user. If a request for moving the mouse cursor has been received from a user, the first controller 401 may determine whether the predetermined waiting time period has elapsed.

If the first controller 401 determines that the predetermined waiting time period has elapsed, the first controller 401 may calculate a movement distance of the mouse cursor from the reference location to a location requested by the user in response to the request for moving the mouse cursor, and then move the mouse cursor by the calculated movement distance.

For example, the first controller 401 may calculate the movement distance of the mouse cursor using Equation (1) below.

$$dx = currentX - previousX$$

$$dy = currentY - previousY \qquad , \qquad (1)$$

where $dx$ represents the movement distance in the x-axis direction, X represents X-axis coordinate information, $dy$ represents the movement distance in the y-axis direction, and $Y$ represents Y-axis coordinate information.

Meanwhile, if the predetermined waiting time period has not elapsed, the first controller 401 may hold the mouse cursor at the reference location by ignoring the request for moving the mouse cursor.

Additionally or alternatively, the first controller 401 may search for and analyze object property information corresponding to a displayed object. For example, if the object property information includes indicator information, the first controller 401 may determine that the object is an object including an indicator, and if the object property information includes no indicator information, the first controller 401 may determine that the object is an icon.

For example, if the first controller 401 determines that the object is an object including an indicator, the first controller 401 may determine whether a request for moving the mouse cursor is received from a user. If a request for moving the mouse cursor has been received from a user, the first controller 401 may move the mouse cursor according to the request for moving the mouse cursor, and then check the current location of the mouse cursor. Then, the first controller 401 may determine whether the mouse cursor is in an object area of the object including the indicator, based on the current location of the mouse cursor. If the first controller 401 determines that the mouse cursor is in an object area of the object including the indicator, based on the current location of the mouse cursor, the first controller 401 moves the mouse cursor from its current location to a predetermined location on the indicator, based on coordinate information of the current location of the mouse cursor and coordinate information of the indicator.

Herein, the object area of the object including the indicator is a predetermined area including the object, and the predetermined location may be a location having the shortest distance to the current location of the mouse cursor on the indicator.

The first controller 401 may determine whether a request for moving the mouse cursor is received from a user. If a request for moving the mouse cursor has been received from a user, the first controller 401 may calculate a movement distance of the mouse cursor according to the request. At this time, the first controller 401 may calculate a movement distance of the mouse cursor according to Equation (1) defined above.

The first controller 401 may compare the calculated movement distance of the mouse cursor to a reference movement distance. The first controller 401 may determine whether the movement distance of the mouse cursor is equal to or longer than the reference movement distance based on the result of the comparison.

For example, if the indicator is a linear path indicator extending in the x-axis direction (e.g., such as the progress bar depicted in FIG. 2), the first controller 401 may compare the movement distance of the mouse cursor to the reference movement distance using Equation (2) below.

$$dy >= range(\alpha) \tag{2},$$

where *dy* represents the movement distance in the y-axis direction, and *range($\alpha$)* represents the reference movement distance.

For example, if the indicator is a linear path indicator extending in the y-axis direction, the first controller 401 may compare the movement distance of the mouse cursor to the reference movement distance using Equation (3) below.

$$dx >= range(\beta) \tag{3}$$

where *dx* represents the movement distance in the x-axis direction, and *range()* represents the reference movement distance.

If the movement distance of the mouse cursor is equal to or longer than the reference movement distance, the first controller 401 may move the mouse cursor by the calculated movement distances *dx* and *dy.* By contrast, if the movement distance of the mouse cursor is shorter than the reference movement distance, the first controller 401 may move the mouse cursor along the indicator. For example, if the indicator is a linear path indicator extending in the x-axis direction, the first controller 401 may move the mouse cursor by the calculated movement distance *dx* (*dy*=0) in the x-axis direction. Meanwhile, if the indicator is a linear path indicator extending in the y-axis direction, the first controller 401 may move the mouse cursor by the calculated movement distance *dy* (*dx*=0) in the y-axis direction.

Additionally or alternatively, according to aspects of the disclosure, the first controller 401 may determine whether there is a displayed object. If the first controller 401 determines that there is a displayed object, the first controller 401 may search for object property information corresponding to the displayed object in the first memory unit 407, and analyze the object property information. The first controller 401 may determine whether the object is an icon or an object including an indicator, based on the result of the analysis. The object property information is information representing the property of the object, and if the object includes an indicator, the object property information includes indicator information related to the indicator. The indicator information may include coordinate information of the indicator and a reference movement distance corresponding to the indicator.

If the object property information includes indicator information, the first controller 401 may determine that the object is an object including an indicator. Alternatively, if the object property information includes no indicator information, the first controller 401 may determine that the object is an icon.

For example, if the first controller 401 determines that the object is an icon, the first controller 401 may determine whether a request for moving the mouse cursor is received from a user. For example, if a request for moving the mouse cursor has been received from a user, the first controller 401 may move the mouse cursor according to the request. Then, the first controller 401 may check the current location of the mouse cursor. For example, the first controller 401 may determine whether the mouse cursor is in an object area of the icon, based on the current location of the mouse cursor.

For example, if the first controller 401 determines that the mouse cursor is in the object area of the icon, the first controller 401 may change the color of the object area including the icon. For example, the object area of the icon may be a predetermined area including the icon. For example, referring to FIG. 10, if the mouse cursor has been moved from the location 1001 to the location 1007 which is in the object area 1003 by a user after the object 1005 is displayed, the first controller 401 may display the object area 1009 by changing the color of the object area 1003.

Thereafter, the first controller 401 may determine whether a request for moving the mouse cursor is received from a user. For example, if a request for moving the mouse cursor has been received from a user, the first controller 401 may move the mouse cursor according to the request. Then, the first controller 401 may check the current location of the mouse cursor. The first controller 401 may determine whether the mouse cursor is out of the object area of the icon, based on the current location of the mouse cursor.

For example, if the first controller 401 determines that the mouse cursor is out of the object area of the icon, the first controller 401 may change the color of the object area including the icon. More particularly, in one instance, if the first controller 401 determines that the mouse cursor is out of the object area 1009, the first controller 401 may change the color of the object area 1009 to the color of the object area 1003. Additionally or alternatively, if the first controller 401 determines that the mouse cursor is out of the object area 1009, the first controller 401 may change the color of the object area 1009 to another color that is different from the color of the object area 1003.

Additionally or alternatively, according to aspects of the disclosure, the first controller 401 may determine whether there is a displayed object. For example, if the first controller 401 determines that there is a displayed object, the first controller 401 may search for object property information corresponding to the displayed object in the first memory unit 407, and analyze the object property information. The first controller 401 may determine whether the object is an icon or an object including an indicator, based on the result of the analysis. For example, the object property information is information representing the property of the object, and if the object includes an indicator, the object property information may include indicator information related to the indicator. The indicator information may include coordinate information of the indicator and a reference movement distance corresponding to the indicator.

If the object property information includes indicator information, the first controller 401 may determine that the object is an object including an indicator, and if the object property information includes no indicator information, the first controller 401 may determine that the object is an icon. For example, if the first controller 401 determines that the object is an icon, the first controller 401 may determine whether a request for moving the mouse cursor is received from a user.

For example, if a request for moving the mouse cursor has been received from a user, the first controller 401 may move the mouse cursor according to the request. Then, the first controller 401 may check the current location of the mouse cursor. The first controller 401 may determine whether the mouse cursor is in the object area of the icon, based on the current location of the mouse cursor. Additionally or alternatively, if the first controller 401 determines that the mouse cursor is in the object area of the icon, the first controller 401 may change the size of the object area. For example, the object area including the icon may be a predetermined area including the icon.

For example, referring to FIG. 11, if the mouse cursor has been moved from the location 1101 to the location 1107 which is in the object area 1103 by a user after the object 1105 is displayed, the first controller 401 may display the object area 1109 by enlarging the size of the object area 1103 at a predetermined magnification. As another example, if the mouse cursor has been moved from the location 1101 to the location 1107 which is in the object area 1103 by a user after the object 1105 is displayed, the first controller 401 may display the object area 1103 by reducing the size of the object area 1103.

Thereafter, the first controller 401 may determine whether a request for moving the mouse cursor is received from a user. For example, if a request for moving the mouse cursor has been received from a user, the first controller 401 may move the mouse cursor according to the request. Then, the first controller 401 may check the current location of the mouse cursor. The first controller 401 may determine whether the mouse cursor is out of the object area of the icon, based on the current location of the mouse cursor.

For example, if the first controller 401 determines that the mouse cursor is out of the object area of the icon, the first controller 401 may change the size of the object area. For example, if the first controller 401 determines that the mouse cursor is out of the object area 1109, the first controller 401 may reduce the size of the object area 1109 to the size of the object area 1103. As another example, if the first controller 401 determines that the mouse cursor is out of the object area 1109, the first controller 401 may enlarge the size of the object area 1109 to the size of the object area 1103.

The above embodiments relate to examples of changing a color or a size of an object area according to whether a mouse cursor has been moved in or out of the object area. However, it is also possible to change another property of the object area. For example, the first controller 401 may change a pattern or a texture of an object area when a mouse cursor has been moved in or out of the object area. However, these are exemplary embodiments, and other embodiments are also possible.

Additionally or alternatively, according to aspects of the disclosure, the first controller 401 may determine whether there is a displayed object. If the first controller 401 determines that there is a displayed object, the first controller 401 may search for object property information corresponding to the displayed object in the first memory unit 407, analyze the object property information, and then determine whether the object is an icon or an object including an indicator, based on the result of the analysis. For example, the object property information may be information representing the property of the object. For example, if the object includes an indicator, the object property information may include indicator information related to the indicator. In some implementations, the indicator information may include coordinate information of the indicator and a reference movement distance corresponding to the indicator.

If the object property information includes indicator information, the first controller 401 may determine that the corresponding object is an object including an indicator, and if the object property information includes no indicator information, the first controller 401 may determine that the corresponding object is an icon. For example, if the first controller 401 determines that the object is an icon, the first controller 401 may determine whether a request for moving a mouse cursor is received from a user.

For example, if a request for moving a mouse cursor has been received from a user, the first controller 401 may move the mouse cursor according to the request, and then check the current location of the mouse cursor. Then, the first controller 401 may determine whether the mouse cursor is in the object area of the icon, based on the current location of the mouse cursor. For example, the object area of the icon may be a predetermined area including the icon.

For example, if the first controller 401 determines that the mouse cursor is in the object area of the icon, the first controller 401 may change the color of the mouse cursor. For example, referring to FIG. 12, if the mouse cursor has been moved from the location 1201 to the location 1207 which is in the object area 1203 by a user after the object 1205 is displayed, the first controller 401 may change the color of the mouse cursor.

Thereafter, the first controller 401 may determine whether a request for moving the mouse cursor is received from a user. For example, if a request for moving the mouse cursor has been received from a user, the first controller 401 may move the mouse cursor according to the request, and then check the current location of the mouse cursor. Then, the first controller 401 may determine whether the mouse cursor is out of the object area of the icon, based on the current location of the mouse cursor.

For example, if the first controller 401 determines that the mouse cursor is out of the object area of the icon, the first controller 401 may change the color of the mouse cursor. For example, if the first controller 401 determines that the mouse cursor is out of the object area 1203, the first controller 401 may restore the color of the mouse cursor to its original color before the mouse cursor is moved in the object area 1203. As another example, if the first controller 401 determines that the mouse cursor is out of the object area 1203, the controller 401 may change the color of the mouse cursor to another color that is different than that of the mouse cursor before (or when) the mouse cursor is moved in the area 1203.

Additionally or alternatively, according to aspects of the disclosure, the first controller 401 may determine whether there is a displayed object. For example, if the first controller 401 determines that there is a displayed object, the first controller 401 may search for object property information corresponding to the displayed object, in the first memory unit 407, and analyze the object property information. The first controller 401 may determine whether the object is an icon or an object including an indicator, based on the result of the analysis. Herein, the object property information is information representing the property of the object, and if the object includes an indicator, the object property information may include indicator information related to the indicator. The indicator information may include coordinate information of the indicator and a reference movement distance corresponding to the indicator.

If the object property information includes indicator information, the first controller 401 may determine that the object is an object including an indicator, and if the object property information includes no indicator information, the first controller 401 may determine that the object is an icon. For example, if the first controller 401 determines that the object is an icon, the first controller 401 may determine whether a request for moving the mouse cursor is received from a user. If a request for moving the mouse cursor has been received from a user, the first controller 401 may move the mouse cursor according to the request, and then check the current location of the mouse cursor. Then, the first controller 401 may determine whether the mouse cursor is in the object area of the icon, based on the current location of the mouse cursor. For example, if the first controller 401 determines that the mouse cursor is in the object area of the icon, the first controller 401 may hold the mouse cursor at its current location. For example, referring to FIG. 13, if the mouse cursor has been moved from the location 1301 to the location 1307 after the object 1305 is displayed, the first controller 401 may set a movement velocity of the mouse cursor to "0" for a predetermined waiting time period in order to hold the mouse cursor still for the predetermined waiting time period.

Then, the first controller 401 may wait for the predetermined waiting time period with respect to movement of the mouse cursor. The predetermined waiting time period may have been designated in advance in order to hold a mouse cursor. Thereafter, the first controller 401 may determine whether a request for moving the mouse cursor is received from a user. For example, if a request for moving the mouse cursor has been received from a user, the first controller 401 may determine whether the predetermined waiting time period has elapsed.

If the first controller 401 determines that the predetermined waiting time period has not elapsed, the first controller 401 may hold the mouse cursor at its current location by ignoring the request for moving the mouse cursor. If the first controller 401 determines that the predetermined waiting time period has elapsed, the first controller 401 may move the mouse cursor according to the request for moving the mouse cursor. For example, if the first controller 401 determines that the predetermined waiting time period has elapsed, the first controller 401 may set a movement velocity of the mouse cursor to a reference velocity, and if the first controller 401 determines that the mouse cursor is out of the object area 1303, the first controller 401 may move the mouse cursor at the reference velocity. For example, the reference velocity is a reference movement velocity of the mouse cursor, and means a movement velocity of the mouse cursor before the mouse cursor is moved in the object area 1303.

FIGS. 12 and 13 relate to examples of changing a color or a movement velocity of a mouse cursor according to whether the mouse cursor has been moved in or out of an object area. However, it is also possible to change another property of the mouse cursor. For example, the first controller 401 may change a pattern, a texture, or a size of a mouse cursor when the mouse cursor has been moved in or out of an object area. However, these are exemplary embodiments, and other embodiments are also possible.

According to aspects of the disclosure, the first controller 401 may determine whether there is a displayed object on the first display unit 403 (or an external display unit). For example, if the first controller 401 determines that there is a displayed object, the first controller 401 may search for object property information corresponding to the displayed object in the first memory unit 407, and analyze the object property information. The first controller 401 may determine whether the object is an icon or an object including an indicator, based on the result of the analysis. For example, the object property information is information representing the property of the object, and if the object includes an indicator, the object property information may include indicator information related to the indicator. The indicator information may include coordinate information of the indicator and a reference movement distance corresponding to the indicator.

If the object property information includes indicator information, the first controller 401 may determine that the object is an object including an indicator, and if the object property information includes no indicator information, the first controller 401 may determine that the object is an icon. For example, if the first controller 401 determines that the object is an icon, the first controller 401 may determine whether a request for moving the mouse cursor is received from a user.

For example, if a request for moving the mouse cursor has been received from a user, the first controller 401 may move the mouse cursor according to the request, and then check the current location of the mouse cursor. Then, the first controller 401 may determine whether the mouse cursor is in the object area of the object, based on the current location of the mouse cursor. For example, the object area of the icon may be a predetermined area including the icon.

For example, if the first controller 401 determines that the mouse cursor is in the object area of the object, the first controller 401 may change the size of the icon. For example, referring to FIG. 14, if the mouse cursor has been moved from the location 1401 to the location 1407 which is in the object area 1403 by a user after the object 1405 is displayed, the first controller 401 may display the object 1409 by enlarging the size of the object 1405. As another example, if the mouse cursor has been moved from the location 1401 to the location 1407 which is in the object area 1403 by a user after the object 1405 is displayed, the first controller 401 may display the object 1409 by reducing the size of the object 1405.

Thereafter, the first controller 401 may determine whether a request for moving the mouse cursor is received from a user. For example, if a request for moving the mouse cursor has been received from a user, the first controller 401 may move the mouse cursor according to the request, and then determine the current location of the mouse cursor. Then, the first controller 401 may determine that the mouse cursor is out of the object area of the icon, based on the current location of the mouse cursor.

For example, if the first controller 401 determines that the mouse cursor is out of the object area of the icon, the first controller 401 may change the size of the icon. For example, if the first controller 401 determines that the mouse cursor is out of the object area 1403, the first controller 401 may reduce the size of the object 1409 to the size of the object 1405. As another example, if the first controller 401 determines that the mouse cursor is out of the object area 1403, the first controller 401 may enlarge the size of the object 1409 to the size of the object 1405.

The above embodiment relates to an example of changing a size of an object according to whether a mouse cursor has been moved in or out of the corresponding object area. However, it is also possible to change another property of the object. For example, the first controller 401 may change a pattern, a texture, or a color of an object when a mouse cursor has been moved in or out of the corresponding object area. However, these are exemplary embodiments, and other embodiments are also possible.

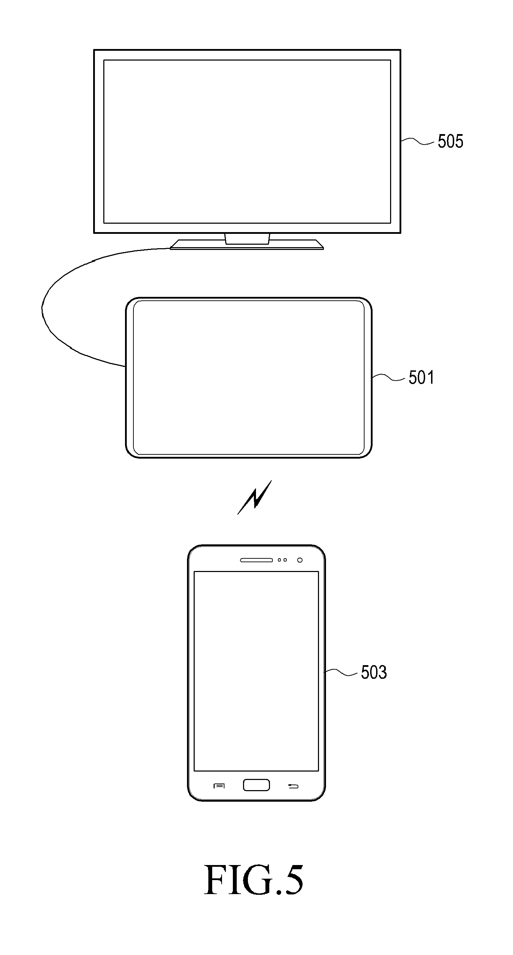

FIG. 5 is a block diagram illustrating an example of a system according to aspects of the present disclosure. In this example, the system includes a terminal 501, a mobile terminal 503, and an external display apparatus 505.

The external display apparatus 505 displays an object under the control of the terminal 501. For example, the external display apparatus 505 may display an object including an icon or a path.

The mobile terminal 503 is connected to the terminal 501 through a short-range wireless connection, and may transmit movement information regarding movement of the mobile terminal 503 to the terminal 501 in order to provide an air mouse function. For example, The mobile terminal 503 may act as a mouse or air mouse for the terminal 501. For example, the short-range wireless connection may be established using the Bluetooth protocol. In operation, the terminal 503 may provide the terminal 501 with signals indicating the orientation (or changes in orientation) of the mobile terminal 503.

Furthermore, in this example, the terminal 501 is connected to the external display apparatus 505 in a wired or wireless connection. The terminal 501 receives the movement information from the mobile terminal 503. For example, the terminal 501 may be connected to the external display apparatus 505 through a High-Definition Multimedia Interface (HDMI). In operation, the terminal 501 may output an object to the external display apparatus 505. In addition, the terminal 501 may move a mouse cursor displayed on the external display apparatus 505 according to a property of the object and signals received from the terminal 503 that indicate the orientation (or changes in the orientation) of the terminal 503.

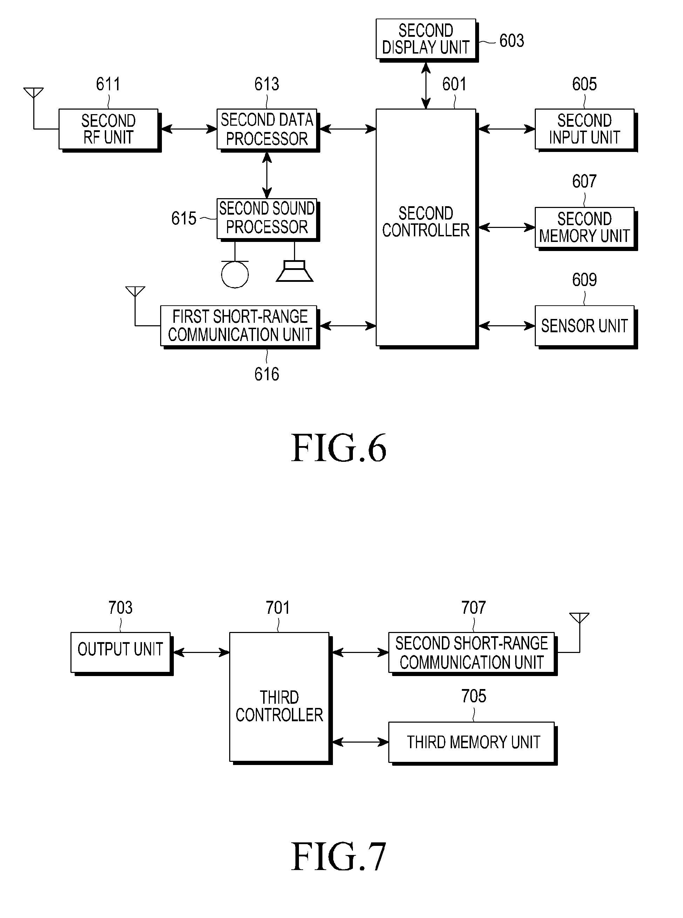

FIG. 6 is a block diagram illustrating an example of an electronic device that provides an air mouse function, according to aspects of the present disclosure.

Referring to FIG. 6, an electronic device may include a second controller 601, a second display unit 603, a second input unit 605, a second memory unit 607, a sensor unit 609, a second RF unit 611, a second data processor 613, a second sound processor 615, and a first short-range communication unit 617. The second RF unit 611 performs a wireless communication function of the electronic device. In more detail, the second RF unit 611 includes a radio transmitter for up-converting the frequency of a signal to be transmitted and amplifying the signal to be transmitted, a radio receiver for low-noise amplifying a received signal and down-converting the frequency of the received signal, etc.

Also, the second data processor 613 includes a transmitter for encoding and modulating a signal to be transmitted, a receiver for demodulating and decoding a received signal, etc. Here, the second data processor 613 may be comprised of a modem and a codec, and the codec may include a data codec for processing packet data, etc. and an audio codec for processing audio signals, such as voice, etc.

Also, the second sound processor 615 performs a function of reproducing a reception audio signal output from the second data processor 613 through a speaker, or of transmitting a transmission audio signal received from a microphone to the second data processor 613.

The second input unit 605 may include keys for allowing a user to input numerical and text information, and functional keys for setting various functions.

The second display unit 603 may display an image signal on a screen, and display data requested to be output by the second controller 601.

If the second display unit 603 is implemented as a capacitive-type or resistive-type touch screen, the second input unit 605 may include a minimum number of predetermined keys, and the second display unit 603 may provide a part of the key input functions of the second input unit 605.

The second memory unit 607 may include a program memory and a data memory. The program memory stores OS for controlling the general operations of the electronic device, and the data memory stores various kinds of data created when the electronic device operates.

The first short-range communication unit 617 performs a short-range communication function of the electronic device. For example, the first short-range communication unit 617 may be a Bluetooth module for providing Bluetooth communication. Particularly, the first short-range communication unit 617 receives movement information from the second controller 601, and transmits the received movement information to the terminal 501 (see FIG. 5).

Then, the sensor unit 609 measures the movement of the electronic device by a user, and transmits the result of the measurement to the second controller 601. Particularly, the sensor unit 609 may include a gyro sensor and an acceleration sensor in order to measure a movement direction of the electronic device through the gyro sensor and measure a movement distance of the electronic device through the acceleration sensor.

Also, the second controller 601 performs a function of controlling overall operations of the electronic device. Particularly, the second controller 601 may create movement information based on the measurement results received from the sensor unit 609. The second controller 601 may transmit the created movement information to the terminal 501 (see FIG. 5) through the first short-range communication unit 617.

More particularly, the second controller 601 may receive a movement direction of the electronic device and a movement distance corresponding to the movement direction from the sensor unit 609, and calculate x- and y-axis movement distances with respect to the movement of the electronic device based on the received movement direction and movement distance. The second controller 60 may create movement information including the calculated x- and y-axis movement distances, and transmit the created movement information to the first short-range communication unit 617.

FIG. 7 is a block diagram illustrating an example of an electronic device according to aspects of the present disclosure. The electronic device in this example includes a third controller 701, an output unit 703, a third memory unit 705, and a second short-range communication unit 707. The third memory unit 705 may include any suitable type of volatile and/or non-volatile memory, such a Read Only Memory (ROM), a Random Access Memory (RAM), a flash memory, a Solid State Drive (SSD), a Hard Drive (HD). In operation, the third memory unit 705 includes a program memory and a data memory. The program memory stores OS for controlling the general operations of the electronic device, and the data memory stores various kinds of data created when the electronic device operates.

The output unit 703 transmits an object stored in the third memory unit 705 to the external display apparatus 505 (see FIG. 5). Particularly, the output unit 703 transmits an object including an icon or indicator to the external display apparatus 505.

The second short-range communication unit 707 performs a short-range communication function of the electronic device. For example, the second short-range communication unit 707 may be a Bluetooth module for providing Bluetooth communication. Particularly, the second short-range communication unit 707 may receive movement information from the mobile terminal 503 and transmit the received movement information to the third controller 701.

The third controller 701 may include one or more of a processor (e.g., an ARM-based processor, an x86-based processor, and a MIPS-based processor), an Application Specific Integrated Circuit (ASIC), a Field-Programmable Gate Array (FPGA), and/or any other suitable type of processing circuitry. In operation, the third controller 701 performs a function of controlling overall operations of the electronic device. Particularly, the third controller 701 may move a mouse cursor over a displayed object according to the property of the object. More particularly, according to aspects of the disclosure, the third controller 701 may determine whether there is a displayed object. If the third controller 701 determines that there is a displayed object, the third controller 701 may search for and analyze object property information corresponding to the displayed object to determine whether the object is an icon or an object including an indicator. In this example, the object property information is information representing the property of the object, and if the object includes an indicator, the object property information may include path indicator information related to the indicator. The indicator information may include coordinate information of the indicator and a reference movement distance corresponding to the indicator.

For example, if the object property information includes indicator information, the third controller 701 may determine that the object is an object including an indicator, and if the object property information includes no indicator information, the third controller 701 may determine that the object is an icon.

If the third controller 701 determines that the object is an icon, the third controller 701 may determine whether a request for moving the mouse cursor is received from a user. For example, if the third controller 701 receives movement information from the mobile terminal 503 (see FIG. 5), the third controller 701 may determine that a request for moving the mouse cursor has been received from a user. If a request for moving the mouse cursor has been received, the third controller 701 may move the mouse cursor according to the request, and then check the current location of the mouse cursor. Then, the third controller 701 may determine whether the mouse cursor is in an object area of the icon, based on the current location of the mouse cursor. If the third controller 701 determines that the mouse cursor is in the object area of the icon, the third controller 701 may move the mouse cursor from its current location to a reference location in the icon. Here, the object area of the icon may be a predetermined area including the icon. Also, the reference location may be a predetermined location in the icon. For example, the reference location may be the central point of the icon.

Also, the third controller 701 may wait for a predetermined waiting time period with respect to movement of the mouse cursor. Herein, the predetermined waiting time period may have been designated in advance in order to hold the mouse cursor. Thereafter, the third controller 701 may determine whether a request for moving the mouse cursor is received from a user. If a request for moving the mouse cursor has been received from a user, the third controller 701 may determine whether the predetermined waiting time period has elapsed.

If the third controller 701 determines that the predetermined waiting time period has elapsed, the third controller 701 may calculate a movement distance of the mouse cursor from the reference location to a location requested by the user in response to the request for moving the mouse cursor, and then move the mouse cursor by the calculated movement distance. For example, the third controller 701 may calculate the movement distance of the mouse cursor using Equation (1) defined above. Meanwhile, if the third controller 701 determines that the predetermined waiting time period has not elapsed, the third controller 701 may hold the mouse cursor at the reference location by ignoring the request for moving the mouse cursor.

According to the second and third aspects, the third controller 701 may search for and analyze object property information corresponding to a displayed object. For example, if the object property information includes indicator information, the third controller 701 may determine that the displayed object is an object including an indicator, and if the object property information includes no indicator information, the third controller 701 may determine that the displayed object is an icon.

If the third controller 701 determines that the displayed object is an object including an indicator, the third controller 701 may determine whether a request for moving the mouse cursor is received from a user. For example, if a request for moving the mouse cursor has been received from a user, the third controller 701 may move the mouse cursor according to the request, and then check the current location of the mouse cursor. Then, the third controller 701 may determine whether the mouse cursor is in an object area of the object including the indicator, based on the current location of the mouse cursor. If the third controller 701 determines that the mouse cursor is in the object area of the object including the indicator, the third controller 701 may move the mouse cursor from its current location to a predetermined location of the indicator based on coordinate information of the current location of the mouse cursor and coordinate information of the indicator.

Herein, the object area of the object including the indicator is a predetermined area including the object, and the predetermined location may be a location having the shortest distance to the current location of the mouse cursor on the indicator.

Thereafter, the third controller 701 may determine whether a request for moving the mouse cursor is received from a user. If a request for moving the mouse cursor has been received, the third controller 701 may calculate a movement distance of the mouse cursor according to the request. For example, the third controller 701 may calculate a movement distance of the mouse cursor according to Equation (1) defined above.

Then, the third controller 701 may compare the calculated movement distance of the mouse cursor to a reference movement distance, and determine whether the movement distance of the mouse cursor is equal to or longer than the reference movement distance based on the result of the comparison.

For example, if the indicator is shaped as a line extending in the x-axis direction, the third controller 701 may compare the movement distance of the mouse cursor to the reference movement distance using Equation (2) defined above. Additionally or alternatively, if the indicator is shaped as a line extending in the y-axis direction, the third controller 701 may compare the movement distance of the mouse cursor to the reference movement distance using Equation (3) defined above.

If the movement distance of the mouse cursor is equal to or longer than the reference movement distance, the third controller 701 moves the mouse cursor by the calculated movement distances $dx$ and $dy$. On the contrary, if the movement distance of the mouse cursor is shorter than the reference movement distance, the third controller 701 may move the mouse cursor along the indicator. For example, if the indicator is a linear path indicator extending in the x-axis direction, the third controller 701 may move the mouse cursor by the calculated movement distance $dx$ ($dy$=0) in the x-axis direction. Meanwhile, if the indicator is a linear path indicator extending in the y-axis direction, the third controller 701 may move the mouse cursor by the calculated movement distance $dy$ ($dx$=0) in the y-axis direction.

Additionally or alternatively, according to aspects of the disclosure, the third controller 701 may determine whether there is a displayed object. If the third controller 701 determines that there is a displayed object, the third controller 701 may search for object property information corresponding to the displayed object in the third memory unit 705, and analyze the object property information. The third controller 701 may determine whether the object is an icon or an object including an indicator, based on the result of the analysis. For example, the object property information is information representing the property of the object, and if the object includes an indicator, the object property information includes indicator information related to an indicator. The indicator information may include coordinate information of the indicator and a reference movement distance corresponding to the indicator.

For example, if the object property information includes indicator information, the third controller 701 may determine that the object is an object including an indicator. For example, if the object property information includes no indicator information, the third controller 701 may determine that the object is an icon.

For example, if the third controller 701 determines that the object is an icon, the third controller 701 may determine whether a request for moving the mouse cursor is received from a user. For example, if a request for moving a mouse cursor has been received from a user, the third controller 701 may move the mouse cursor according to the request, and then check the current location of the mouse cursor. For example, the third controller 701 may determine whether the mouse cursor is in an object area of the icon, based on the current location of the mouse cursor.

For example, if the third controller 701 determines that the mouse cursor is in the object area of the icon, the third controller 701 may change the color of the object area. For example, the object area of the icon may be a predetermined area including the icon. For example, referring to FIG. 10, if the mouse cursor has been moved from the location 1001 to the location 1007 which is in the object area 1003 by a user after the object 1005 is displayed, the third controller 701 may display the object area 1009 by changing the color of the object area 1003.

Thereafter, the third controller 701 may determine whether a request for moving the mouse cursor is received from a user. For example, if a request for moving the mouse cursor has been received from a user, the third controller 701 may move the mouse cursor according to the request, and then check the current location of the mouse cursor. The third controller 701 may determine whether the mouse cursor is out of the object area of the icon, based on a current location of the mouse cursor.

For example, if the third controller 701 determines that the mouse cursor is out of the object area of the icon, the third controller 401 may change the color of the object area including the icon. For example, if the third controller 701 determines that the mouse cursor is out of the object area 1009, the third controller 701 may change the color of the object area 1009 to the color of the object area 1003. As another example, if the third controller 701 determines that the mouse cursor is out of the object area 1009, the third controller 701 may change the color of the object area 1009 to another color than that of the object area 1003.

Additionally or alternatively, according to aspects of the disclosure, the third controller 701 may determine whether there is a displayed object. For example, if the third controller 701 determines that there is a displayed object, the third controller 701 may search for object property information corresponding to the displayed object in the third memory unit 705, and analyze the object property information. The third controller 701 may determine whether the object is an icon or an object including an indicator, based on the result of the analysis. For example, the object property information is information representing the property of the object, and if the object includes an indicator, the object property information may include indicator information related to the indicator. The indicator information may include coordinate information of the indicator and a reference movement distance corresponding to the indicator.

If the object property information includes indicator information, the third controller 701 may determine that the object is an object including an indicator, and if the object property information includes no indicator information, the third controller 701 may determine that the object is an icon. For example, if the third controller 701 determines that the object is an icon, the third controller 701 may determine whether a request for moving the mouse cursor is received from a user.

For example, if a request for moving the mouse cursor has been received from a user, the third controller 701 may move a mouse cursor according to the request, and then, check the current location of the mouse cursor. The third controller 701 may determine whether the mouse cursor is in the object area of the icon, based on the current location of the mouse cursor. For example, if the third controller 701 determines that the mouse cursor is in the object area of the icon, the third controller 701 may change the size of the object area including the icon. For example, the object area of the icon may be a predetermined area including the icon.

For example, referring to FIG. 11, if the mouse cursor has been moved from the location 1101 to the area 1107 which is in the object area 1103 by a user after the object 1105 is displayed, the third controller 701 may display the obj ect area 1109 by enlarging the size of the object area 1103 at a predetermined magnification. As another example, if the mouse cursor has been moved from the location 1101 to the area 1107 after the object 1105 is displayed, the third controller 701 may display the object area 1109 by reducing the size of the object area 1103.

Thereafter, the third controller 701 may determine whether a request for moving the mouse cursor is received from a user. If a request for moving the mouse cursor has been received from a user, the third controller 701 may move the mouse cursor according to the request, and then check the current location of the mouse cursor. Then, the third controller 701 may determine whether the mouse cursor is out of the object area of the icon based on the current location of the mouse cursor.

If the third controller 701 determines that the mouse cursor is out of the object area of the icon, the third controller 701 may change the size of the object area including the icon. For example, if the third controller 701 determines that the mouse cursor is out of the object area 1109, the third controller 701 may reduce the size of the object area 1109 to the size of the object area 1103. As another example, if the third controller 701 determines that the mouse cursor is out of the object area 1109 by a user, the third controller 701 may enlarge the size of the object area 1109 to the size of the object area 1103.

The above embodiments relate to a method of changing a color or a size of an object area according to whether a mouse cursor has been moved in or out of the object area. However, it is also possible to change another property of the object area. For example, the third controller 701 may change a pattern or a texture of an object area when a mouse cursor has been moved in or out of the object area. However, these are exemplary embodiments, and other embodiments are also possible.

Additionally or alternatively, according to aspects of the disclosure, the third controller 701 may determine whether there is a displayed object. If the third controller 701 determines that there is a displayed object, the third controller 701 may search for object property information corresponding to the displayed object in the third memory unit 705, and analyze the object property information. The third controller 701 may determine whether the object is an icon or an object including an indicator, based on the result of the analysis. Herein, the object property information is information representing the property of the object, and if the object includes an indicator, the object property information may include indicator information related to the indicator. The indicator information may include coordinate information of the indicator and a reference movement distance corresponding to the indicator.

For example, if the object property information includes indicator information, the third controller 701 may determine that the corresponding object is an object including an indicator. For example, if the object property information includes no indicator information, the third controller 701 may determine that the corresponding object is an icon. For example, if the third controller 701 determines that the object is an icon, the third controller 701 may determine whether a request for moving the mouse cursor is received from a user.

For example, if a request for moving the mouse cursor has been received from a user, the third controller 701 may move the mouse cursor according to the request, and then check the current location of the mouse cursor. Then, the third controller 701 may determine whether the mouse cursor is in the object area of the icon, based on the current location of the mouse cursor. For example, the object area of the icon may be a predetermined area including the icon.

For example, if the third controller 701 determines that the mouse cursor is in the object area of the icon, the third controller 701 may change the color of the mouse cursor. For example, referring to FIG. 12, if the mouse cursor has been moved from the location 1201 to the location 1207 which is in the object area 1203 by a user after the object 1205 is displayed, the third controller 701 may change the color of the mouse cursor.

Thereafter, the third controller 701 may determine whether a request for moving the mouse cursor is received from a user. For example, if a request for moving the mouse cursor has been received from a user, the third controller 701 may move the mouse cursor according to the request, and then check the current location of the mouse cursor.

Then, the third controller 701 may determine whether the mouse cursor is out of the object area of the icon, based on the current location of the mouse cursor.

For example, if the third controller 701 determines that the mouse cursor is out of the object area of the icon, the third controller 701 may change the color of the mouse cursor. For example, if the third controller 701 determines that the mouse cursor is out of the object area 1203, the third controller 701 may restore the color of the mouse cursor to its original color before the mouse cursor is moved in the object area 1203. As another example, if the third controller 701 determines that the mouse cursor is out of the object area 1203, the third controller 701 may change the color of the mouse cursor to another color than that of the mouse cursor before the mouse cursor is moved in the object area 1203.

Additionally or alternatively, according to aspects of the disclosure, the third controller 701 may determine whether there is a displayed object. For example, if the third controller 701 determines that there is a displayed object, the third controller 701 may search for object property information corresponding to the displayed object in the third memory unit 705, and analyze the object property information. The third controller 701 may determine whether the object is an icon or an object including an indicator, based on the result of the analysis. Herein, the object property information is information representing the property of the object, and if the object includes an indicator, the object property information may include indicator information related to the indicator. The indicator information may include coordinate information of the indicator and a reference movement distance corresponding to the indicator.

If the object property information includes indicator information, the third controller 701 may determine that the object is an object including an indicator, and if the object property information includes no indicator information, the third controller 701 may determine that the object is an icon. For example, if the third controller 701 determines that the object is an icon, the third controller 701 may determine whether a request for moving the mouse cursor is received from a user.

For example, if a request for moving the mouse cursor has been received from a user, the third controller 701 may move the mouse cursor according to the request, and then check the current location of the mouse cursor. Then, the third controller 701 may determine whether the mouse cursor is in the object area of the icon, based on the current location of the mouse cursor. For example, if the third controller 701 determines that the mouse cursor is in the object area of the icon, the third controller 701 may hold the mouse cursor at its current location. For example, referring to FIG. 13, if the mouse cursor has been moved from the location 1301 to the location 1307 which is in the object area 1303 by a user after the object 1305 is displayed, the third controller 701 may set a movement velocity of the mouse cursor to "0" for a predetermined waiting time period in order to hold the mouse cursor still for the predetermined waiting time period.

Then, the third controller 701 may wait for a predetermined waiting time period with respect to movement of the mouse cursor. In some implementations, the predetermined waiting time period may have been designated in advance. Thereafter, the third controller 701 may determine whether a request for moving the mouse cursor is received from a user. For example, if a request for moving the mouse cursor has been received from a user, the third controller 701 may determine whether the predetermined waiting time period has elapsed.

If the third controller 701 may determine that the predetermined waiting time period has not elapsed, the third controller 701 may hold the mouse cursor at its current location by ignoring the request for moving the mouse cursor. If the third controller 701 determines that the predetermined waiting time period has elapsed, the third controller 701 may move the mouse cursor according to the request for moving the mouse cursor. For example, if the third controller 701 determines that the predetermined waiting time period has elapsed, the third controller 701 may set a movement velocity of the mouse cursor to a reference velocity, and when the mouse cursor exits the object area 1303, the third controller 701 may change the mouse cursor velocity to the reference velocity. In some implementations, the reference velocity may be the velocity of the mouse cursor prior to the mouse cursor being moved inside the object area 1303.

The above embodiments relate to examples of changing a color or a movement velocity of a mouse cursor according to whether the mouse cursor has been moved in or out of an object area. However, it is also possible to change another property of the mouse cursor. For example, the third controller 701 may change a pattern, texture, or a size of a mouse cursor when the mouse cursor has been moved in or out of an object area. However, these are exemplary embodiments, and other embodiments are also possible.

Additionally or alternatively, according to aspects of the disclosure, the third controller 701 may determine whether there is a displayed object. For example, if the third controller 701 determines that there is a displayed object, the third controller 701 may search for object property information corresponding to the displayed object in the third memory unit 705, and analyze the object property information. The third controller 701 may determine whether the object is an icon or an object including an indicator, based on the result of the analysis. For example, the object property information may include information representing the property of the object, and if the object includes an indicator, the object property information may include indicator information related to the indicator. The indicator information may include coordinate information of the indicator and a reference movement distance corresponding to the indicator.

For example, if the object property information includes indicator information, the third controller 701 may determine that the object is an object including an indicator. For example, if the object property information includes no indicator information, the third controller 701 may determine that the object is an icon. For example, if the object is an icon, the third controller 701 may determine whether a request for moving the mouse cursor is received from a user.

For example, if a request for moving the mouse cursor has been received from a user, the third controller 701 may move the mouse cursor according to the request, and then check the current location of the mouse cursor. Then, the third controller 701 may determine whether the mouse cursor is in the object area of the object, based on the current location of the mouse cursor. For example, the object area of the icon may be a predetermined area including the icon.

For example, if the third controller 701 determines that the mouse cursor is in the object area of the object, the third controller 701 may change the size of the icon. For example, referring to FIG. 14, if the mouse cursor has been moved from the location 1401 to the location 1407 which is in the object area 1403 by a user after the object 1405 is displayed, the third controller 701 may display the object 1409 by enlarging the size of the object 1405. As another example, if the mouse cursor has been moved from the location 1401 to the location 1407 which is in the object area 1403 by a user after the object 1405 is displayed, the third controller 701 may display the object 1409 by reducing the size of the object 1405.

Thereafter, the third controller 701 may determine whether a request for moving the mouse cursor is received from a user. For example, if a request for moving the mouse cursor has been received from a user, the third controller 701 may move the mouse cursor according to the request, and then check the current location of the mouse cursor. Then, the third controller 701 may determine that the mouse cursor is out of the object area of the icon, based on the current location of the mouse cursor.

For example, if the third controller 701 determines that the mouse cursor is out of the object area of the icon, the third controller 701 may change the size of the icon. For example, if the third controller 701 determines that the mouse cursor is out of the object area 1403, the third controller 701 may reduce the size of the object 1409 to the size of the object 1405. As another example, if the third controller 701 determines that the mouse cursor is out of the object area 1403, the third controller 701 may enlarge the size of the object 1409 to the size of the object 1405.

The above embodiment relates to an example of changing a size of an object according to whether a mouse cursor has been moved in or out of the corresponding object area. However, it is also possible to change another property of the object. For example, the third controller 701 may change a pattern, a texture, or a color of an object when a mouse cursor has been moved in or out of the corresponding object area. However, these are exemplary embodiments, and other embodiments are also possible.

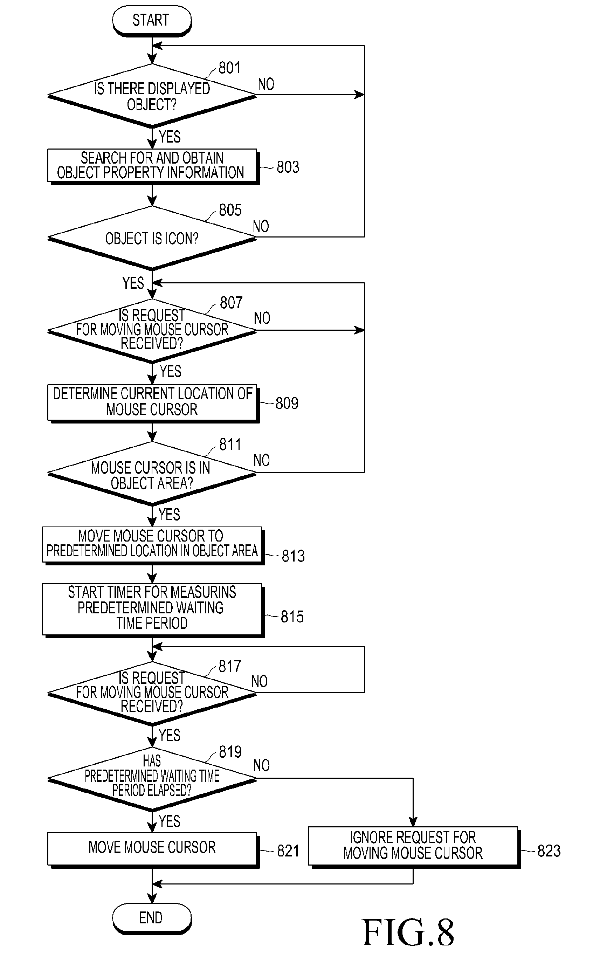

FIG. 8 is a flowchart of an example of a process according to aspects of the disclosure. According to the process, and referring to FIGS. 4 and 8, in operation 801, the first controller 401 may determine whether there is a displayed object on the first display unit 403. If the first controller 401 determines that there is a displayed object, the process may proceed to operation 803, and if the first controller 401 determines that there is no displayed object, operation 801 may be repeated.

In operation 803, the first controller 401 may search the first memory unit 407 for object property information. Then, in operation 805, the first controller 401 may determine whether the displayed object is an icon or an object including an indicator, based on the object property information. Herein, the object property information may be information representing the property of the object. For example, if the object includes an indicator, the object property information may include indicator information related to the indicator. The indicator information may include coordinate information of the indicator and a reference movement distance corresponding to the indicator.

If the object property information includes indicator information, the first controller 401 may determine that the object is an object including an indicator. Alternatively, if the object property information includes no indicator information, the first controller 401 may determine that the object is an icon. If the first controller 401 determines that the object is an icon, the process may proceed to operation 807, and otherwise, the process may proceed to operation 801.

In operation 807, the first controller 401 may determine whether a request for moving the mouse cursor is received from a user. In some implementations, the request may be a mouse or air mouse signal. If a request for moving the mouse cursor has been received from a user, the process may proceed to operation 809. Otherwise, if no request is received, operation 807 may be repeated.

In operation 809, the first controller 401 may move the mouse cursor according to the request, and then determine the current location of the mouse cursor. In operation 811, the first controller 401 may determine whether the mouse cursor has entered the object area of an icon, based on the current location of the mouse cursor. If the first controller 401 determines that the mouse cursor is in the object area of the icon, the process may proceed to operation 813. Otherwise, if the mouse cursor is not in the object area of the icon, the process may return to operation 807.

In operation 813, the first controller 401 may move the mouse cursor from its current location (e.g., the location the mouse cursor was moved to in operation 809) to a reference location of the icon, and then the process may proceed to operation 815. Herein, the object area of the icon is a predetermined area including the icon. Also, the reference location is a predetermined location in the icon. For example, the reference location may be the center of the icon, a location in a central portion of the icon, or any other location in the icon.

In operation 815, the first controller 401 may start a timer for measuring a predetermined time period in which the mouse cursor is to be held still, and then the process may proceed to operation 817. In some implementations, the predetermined waiting time period may be specified in advance.

In operation 817, the first controller 401 may determine whether a request for moving the mouse cursor is received from a user. If a request for moving the mouse cursor has been received from a user, the process may proceed to operation 819. Otherwise, operation 817 may be repeated.

In operation 819, the first controller 401 may determine whether the predetermined waiting time period has elapsed. If the first controller 401 determines that the predetermined waiting time period has elapsed, the process may proceed to operation 821. Otherwise, if the predetermined waiting time period has not elapsed, the process may proceed to operation 823.

In operation 821, the first controller 401 may calculate a movement distance of the mouse cursor from the reference location to a location requested by the user in response to the request for moving the mouse cursor, and then move the mouse cursor by the calculated movement distance. For example, the first controller 401 may calculate the movement distance of the mouse cursor using Equation (1) defined above. In operation 823, the first controller 401 may ignore the request for moving the mouse cursor and hold the mouse cursor still at its current location.

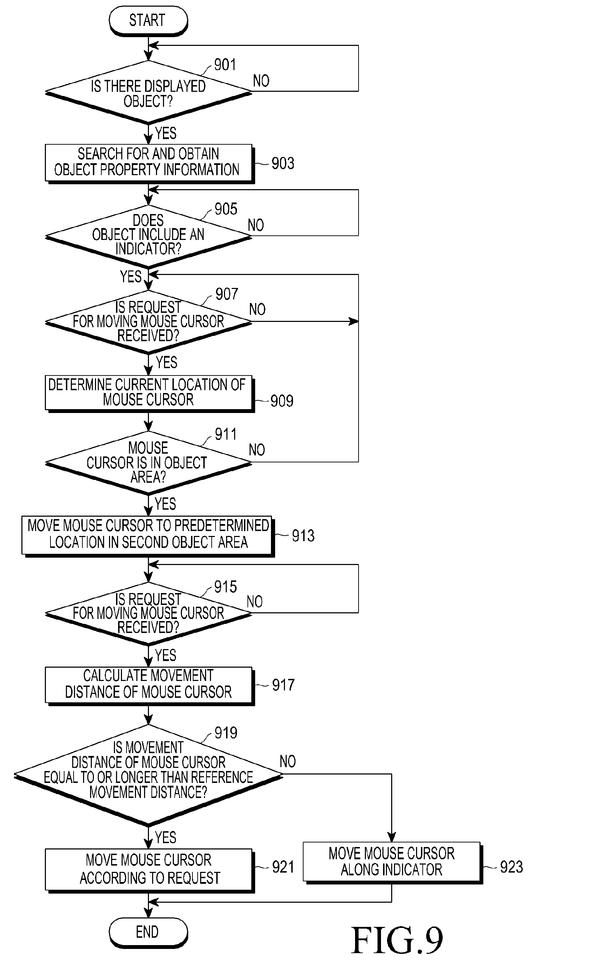

FIG. 9 is a flowchart of an example of another process, according to aspects of the disclosure. Referring to FIGS. 4 and 9, in operation 901, the first controller 401 may determine whether an object is displayed on the first display unit 403. If the first controller 401 determines that there is a displayed object, the process may proceed to operation 903. Otherwise, operation 901 may be repeated.

In operation 903, the first controller 401 may obtain object property information corresponding to the displayed object.

In operation 905, the first controller 401 may determine whether the displayed object is an object including an indicator. For example, the object property information may be information representing a property of the object. If the object includes an indicator, the object property information may include indicator information related to the indicator, and the indicator information may include coordinate information of the indicator and a reference movement distance corresponding to the indicator.

If the object property information includes indicator information, the first controller 401 may determine that the object is an object including an indicator. Otherwise, if the object property information includes no indicator information, the first controller 401 may determine that the object is an icon. If the object is an object including an indicator, the process may proceed to operation 907. Otherwise, if the object is not an object including an indicator, operation 905 may be repeated.

In operation 907, the first controller 401 may determine whether a request for moving a mouse cursor is received from a user. In some implementations, the request may be a mouse signal or an air mouse signal. If a request for moving a mouse cursor has been received, the process may proceed to operation 909. Otherwise, operation 907 may be repeated.

In operation 909, the first controller 401 may move the mouse cursor according to the request, and then determine the current location of the mouse cursor. In operation 911, the first controller 401 may determine whether the mouse cursor has entered an object area of the object including the indicator. If the first controller 401 determines that the mouse cursor is in the object area, the process may proceed to operation 913. Otherwise, the process may return to operation 907.

In operation 913, the first controller 401 may move the mouse cursor from its current location to a predetermined location on the object's indicator, based on coordinate information of the current location of the mouse cursor and coordinate information of the indicator, and then the process may proceed to operation 915. For example, the object area may be a predetermined area including the object. In some implementations, the predetermined location may be one that lies on the shortest path between the indicator and the mouse cursor.

In operation 915, the first controller 401 may determine whether a request for moving the mouse cursor is received from a user. In some implementations, the request may be a mouse signal or an air mouse signal. The request may specify that the mouse cursor be moved from its current location to a new location. If a request for moving the mouse cursor has been received, the process may proceed to operation 917. Otherwise, operation 915 may be repeated.

In operation 917, the first controller 401 may calculate a movement distance of the mouse cursor according to the request. In some implementations, the movement distance may be the distance between the mouse cursor's current location to the new location that is indicated in the request. For example, the first controller 401 may calculate a movement distance of the mouse cursor based on Equation (1) defined above.

In operation 919, the first controller 401 may compare the calculated movement distance to a reference movement distance, and determine whether the movement distance of the mouse cursor is equal to or longer than the reference movement distance.

For example, if the indicator is a linear path indicator extending in the x-axis direction, the first controller 401 may compare the movement distance of the mouse cursor to the reference movement distance using Equation (2) defined above, and if the indicator is a linear path indicator extending in the y-axis direction, the first controller 401 may compare the movement distance of the mouse cursor to the reference movement distance using Equation (3) defined above. If the movement distance of the mouse cursor is equal to or longer than the reference movement distance, the process may proceed to operation 921. Otherwise, if the movement distance is shorter than the reference movement distance, the process may proceed to operation 923.

In operation 921, the first controller 401 may move the mouse cursor by the calculated movement distances *dx* and *dy* to the new location, as specified by the received request. In operation 923, the first controller 401 may move the mouse cursor along the object's indicator. For example, if the indicator is shaped as straight line extending in the x-axis direction (*e.g.* the progress bar depicted in FIG. 2), the first controller 401 may move the mouse cursor by the calculated movement distance *dx* (*dy*=0) in the x-axis direction. Additionally or alternatively, if the indicator is shaped as a line extending in the y-axis direction, the first controller 401 may move the mouse cursor by the calculated movement distance *dy* (*dx*=0) in the y-axis direction.

FIGS. 8 and 9 relate to methods in which the first controller 401 of the electronic device moves a mouse cursor to a predetermined location of a displayed object according to the property of the object, however, the third controller 701 of the electronic device may perform the same methods as described above with reference to FIGS. 8 and 9.

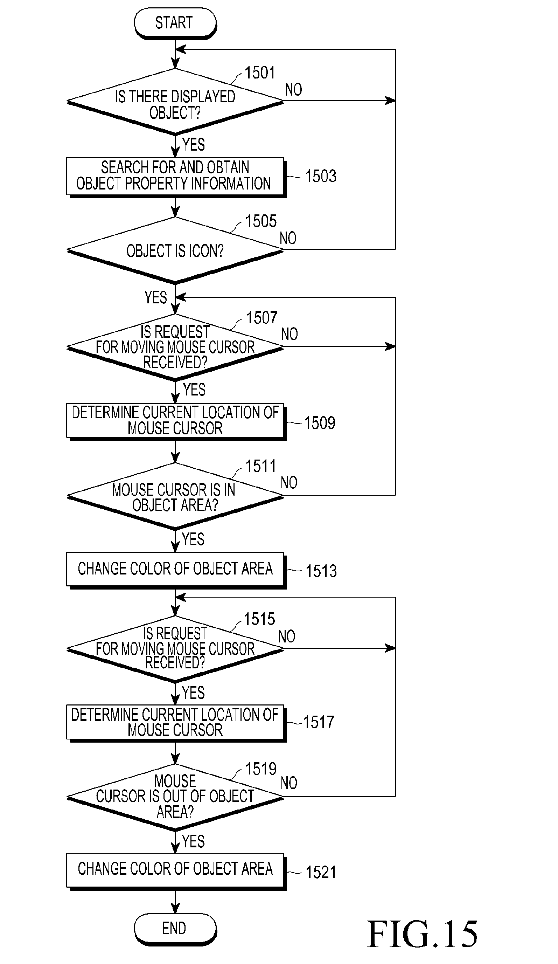

FIG. 15 is a flowchart of an example of yet another process, according to aspects of the disclosure. Referring to FIGS. 4 and 15, in operation 1501, the first controller 401 may determine whether there is a displayed object on the first display unit 403. If the first controller 401 determines that there is a displayed object, the process may proceed to operation 1503. Otherwise, operation 1501 may be repeated.

In operation 1503, the first controller 401 may obtain, from the first memory unit 407, object property information corresponding to the displayed object and analyze the object property information.

In operation 1505, the first controller 401 may determine whether the object is an icon or an object including an indicator, based on the object property information. For example, the object property information may include information representing the property of the object, and if the object includes an indicator, the object property information may include indicator information related to the indicator. The indicator information may include coordinate information of the indicator, and a reference movement distance corresponding to the indicator.

If the object property information includes indicator information, the first controller 401 may determine that the object is an object including an indicator, and if the object property information includes no indicator information, the first controller 401 may determine that the object is an icon. For example, if the first controller 401 determines that the object is an icon, the process may proceed to operation 1507. Otherwise, the process may return to operation 1501.

In operation 1507, the first controller 401 may determine whether a request for moving the mouse cursor is received from a user. In some implementations, the request may be a mouse or air mouse signal. For example, if a request for moving the mouse cursor has been received, the process may proceed to operation 1509. Otherwise, operation 1507 may be repeated.

In operation 1509, the first controller 401 may move the mouse cursor according to the request, and then determine the current location of the mouse cursor. In operation 1511, the first controller 401 may determine whether the mouse cursor is located inside the object area of the icon. For example, the object area of the icon may be a predetermined area including the icon. If the first controller 401 determines that the mouse cursor is in the object area of the icon, the process may proceed to operation 1513. Otherwise, the process may return to operation 1507.

In operation 1513, the first controller 401 may change the color of the object area including the icon. For example, referring to FIG. 10, if the mouse cursor has been moved from the location 1001 to the location 1007, which is in the object area 1003, after the object 1005 is displayed, the first controller 401 may display the object area 1009 by changing the color of the object area 1003.

In operation 1515, the first controller 401 may determine whether a request for moving the mouse cursor is received from a user. In some implementations, the request may be a mouse or an air mouse signal. For example, if a request for moving the mouse cursor has been received, the process may proceed to operation 1517. Otherwise, operation 1515 may be repeated.

In operation 1517, the first controller 401 may move the mouse cursor according to the request and then determine the current location of the mouse cursor.

In operation 1519, the first controller 401 may determine whether the mouse cursor has exited the object area of the icon. For example, if the first controller 401 determines that the mouse cursor has exited the object area of the icon, the process may proceed to operation 1521. Otherwise, the process may return to operation 1515.

In operation 1521, the first controller 401 may change the color of the object area including the icon. For example, if the first controller 401 determines that the mouse cursor is out of the object area 1009, the first controller 401 may change the color of the object area 1009 to the color of the object area 1003. As another example, if the first controller 401 determines that the mouse cursor is out of the object area 1009, the first controller 401 may change the color of the object area 1009 to a color that is different from the color of the object area 1003.

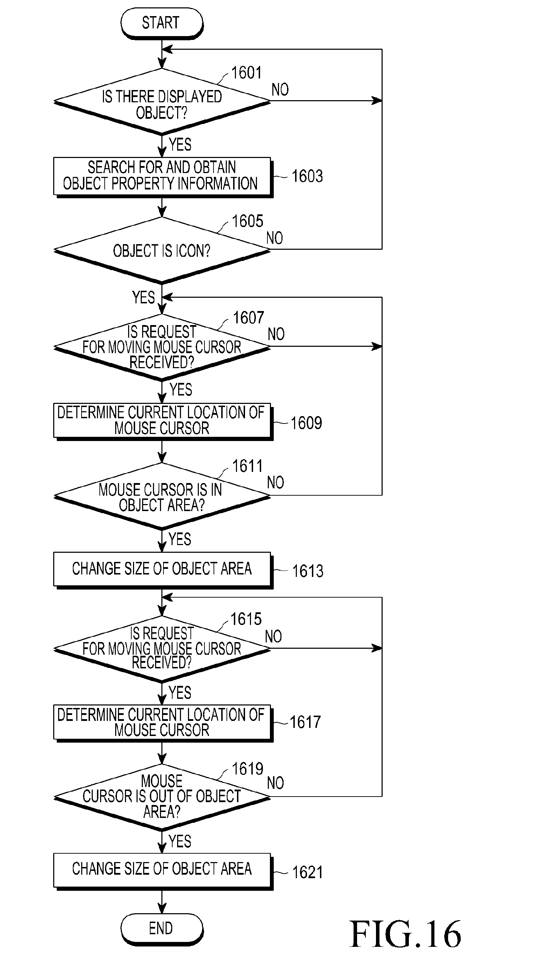

FIG. 16 is a flowchart of an example of yet another process, according to aspects of the disclosure. Referring to FIGS. 4 and 16, in operation 1601, the first controller 401 may determine whether there is a displayed object on the first display unit 403. For example, if the first controller 401 determines that there is a displayed object, the process may proceed to operation 1603. Otherwise, operation 1601 may be repeated.

In operation 1603, the first controller 401 may search, the first memory unit 407, for object property information corresponding to the displayed object, and analyze the object property information. In operation 1605, the first controller 401 may determine whether the object is an icon or an object including an indicator, based on the object property information. For example, the object property information may include information representing the property of the object, and if the object includes an indicator, the object property information may include indicator information related to the indicator. The indicator information may include coordinate information of the indicator, and a reference movement distance corresponding to the indicator.

If the object property information includes indicator information, the first controller 401 may determine that the object is an object including an indicator, and if the object property information includes no indicator information, the first controller 401 may determine that the object is an icon. For example, if the first controller 401 determines that the object is an icon, the process may proceed to operation 1607. Otherwise, the process may return to operation 1601.

In operation 1607, the first controller 401 may determine whether a request for moving the mouse cursor is received. In some implementations, the request may be a mouse signal or an air mouse signal. For example, if a request for moving the mouse cursor has been received, the process may proceed to operation 1609. Otherwise, operation 1607 may be repeated.

In operation 1609, the first controller 401 may move the mouse cursor according to the request and determine the current location of the mouse cursor.

In operation 1611, the first controller 401 may determine whether the mouse cursor has entered the object area of the icon. As discussed above, the object area of the icon may be a predetermined area including the icon. If the first controller 401 determines that the mouse cursor is in the object area of the icon, the process may proceed to operation 1613. Otherwise, the process may return to operation 1607.

In operation 1613, the first controller 401 may change the size of the object area including the icon. For example, referring to FIG. 11, if the mouse cursor has been moved from the location 1101 to the location 1107 which is in the object area 1103 by a user after the object 1105 is displayed, the first controller 401 may display the object area 1109 by enlarging the size of the object area 1103 at a predetermined magnification. As another example, if the mouse cursor has been moved from the location 1101 to the location 1107 which is in the object area 1103 by a user after the object 1105 is displayed, the first controller 401 may display the object 1109 by reducing the size of the object area 1103 at a predetermined magnification.

In operation 1615, the first controller 401 may determine whether a request for moving the mouse cursor is received. If a request for moving the mouse cursor has been received, the process may proceed to operation 1617. Otherwise, operation 1615 may be repeated.

In operation 1617, the first controller 401 may move the mouse cursor according to the request, check the current location of the mouse cursor, and then proceed to operation 1619.

In operation 1619, the first controller 401 may determine whether the mouse cursor is out of the object area of the icon, based on the current location of the mouse cursor. For example, if the first controller 401 determines that the mouse cursor is out of the object area of the icon, the process may proceed to operation 1621. Otherwise, the process may return to operation 1615.

In operation 1621, the first controller 401 may change the size of the object area including the icon. For example, if the first controller 401 determines that the mouse cursor is out of the object area 1109, the first controller 401 may reduce the size of the object area 1109 to the size of the object area 1103. As another example, if the first controller 401 determines that the mouse cursor is out of the object area 1109, the first controller 401 may enlarge the size of the object area 1109 to the size of the object area 1103.

Meanwhile, FIGS. 15 and 16 relate to methods in which the first controller 401 of the electronic device changes a color or a size of an object area according to whether a mouse cursor has been moved in or out of the object area, however, the third controller 701 of the electronic device may perform the same methods as described above with reference to FIGS. 15 and 16.

FIGS. 15 and 16 relate to methods of changing a color or a size of an object area according to whether a mouse cursor has been moved in or out of the object area. However, it is also possible to change another property of the object area. For example, the electronic device may change a pattern or a texture of an object area when the mouse cursor has been moved in or out of the object area. However, these are exemplary embodiments, and other embodiments are also possible.

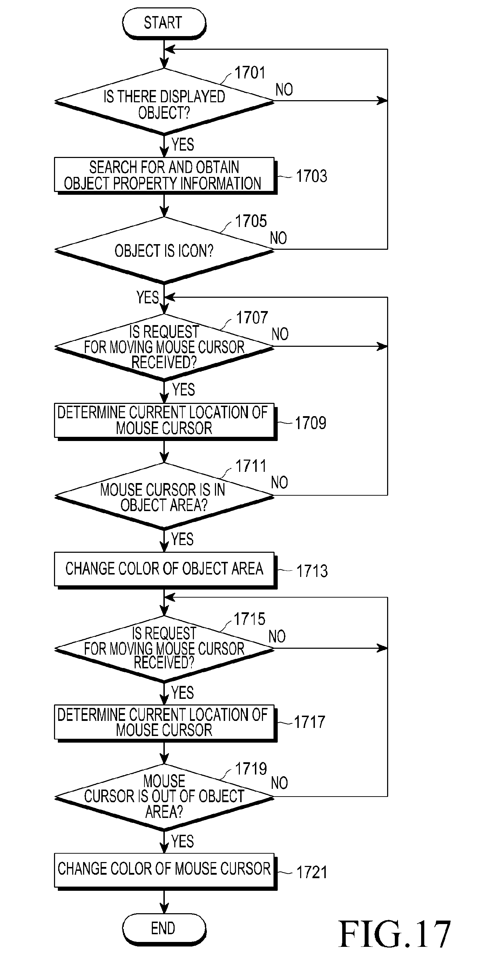

FIG. 17 is a flowchart of an example of yet another process, according to aspects of the disclosure. Referring to FIG. 17, in operation 1701, the first controller 401 (see FIG. 4) may determine whether there is a displayed object on the first display unit 403. For example, if the first controller 401 determines that there is a displayed object, the process may proceed to operation 1703. Otherwise, operation 1701 may be repeated.

In operation 1703, the first controller 401 may search the first memory unit 407 for object property information corresponding to the displayed object (e.g., see FIG. 4). In operation 1705, the first controller 401 may determine whether the object is an icon or an object including an indicator, based on the object property information.

For example, the object property information may include information representing one or more characteristics of the object. If the object includes an indicator, the object property information may include indicator information related to the indicator. The indicator information may include coordinate information of the indicator, and a reference movement distance corresponding to the indicator. If the object property information includes indicator information, the first controller 401 may determine that the object is an object including an indicator, and if the object property information includes no indicator information, the first controller 401 may determine that the object is an icon.

If the first controller 401 determines that the object is an icon, the process may proceed to operation 1707. Otherwise, the process may return to operation 1701.

In operation 1707, the first controller 401 may determine whether a request for moving the mouse cursor is received. In some implementations, the request may be a mouse signal or an air mouse signal. If the request has been received, the process may proceed to operation 1709. Otherwise, operation 1707 may be repeated.

In operation 1709, the first controller 401 may move the mouse cursor according to the request and determine the current location of the mouse cursor. In operation 1711, the first controller 401 may determine whether the mouse cursor has entered the object area of the icon. The object area of the icon may be a predetermined area including the icon. If the first controller 401 determines that the mouse cursor is located inside the object area of the icon, the process may proceed to operation 1713. Otherwise, the process may proceed to operation 1707.

In operation 1713, the first controller 401 may change the color of the mouse cursor. For example, referring to FIG. 12, if the mouse cursor has been moved from the location 1201 to the location 1207, which is in the object area 1203, the first controller 401 may change the color of the mouse cursor.

In operation 1715, the first controller 401 may determine whether a request for moving the mouse cursor is received. In some implementations, the request may be a mouse signal or an air mouse signal. For example, if a request for moving the mouse cursor is received, the process may proceed to operation 1717. Otherwise, operation 1715 may be repeated.

In operation 1717, the first controller 401 may move the mouse cursor according to the request and determine the current location of the mouse cursor.

In operation 1719, the first controller 401 may determine whether the mouse cursor has exited the object area of the icon. For example, if the first controller 401 determines that the mouse cursor is no longer located inside the object area of the icon, the process may proceed to operation 1721. Otherwise, the process may proceed to operation 1715.

In operation 1721, the first controller 401 may change the color of the mouse cursor. For example, if the first controller 401 determines that the mouse cursor is out of an object area 1203, the first controller 401 may restore the color of the mouse cursor to its original color before the mouse cursor was moved inside the object area 1203. As another example, if the first controller 401 determines that the mouse cursor is outside of the object area 1203, the first controller 401 may change the color of the mouse cursor to another color that is different from the color of the mouse cursor before the mouse cursor was moved in the object area 1203.

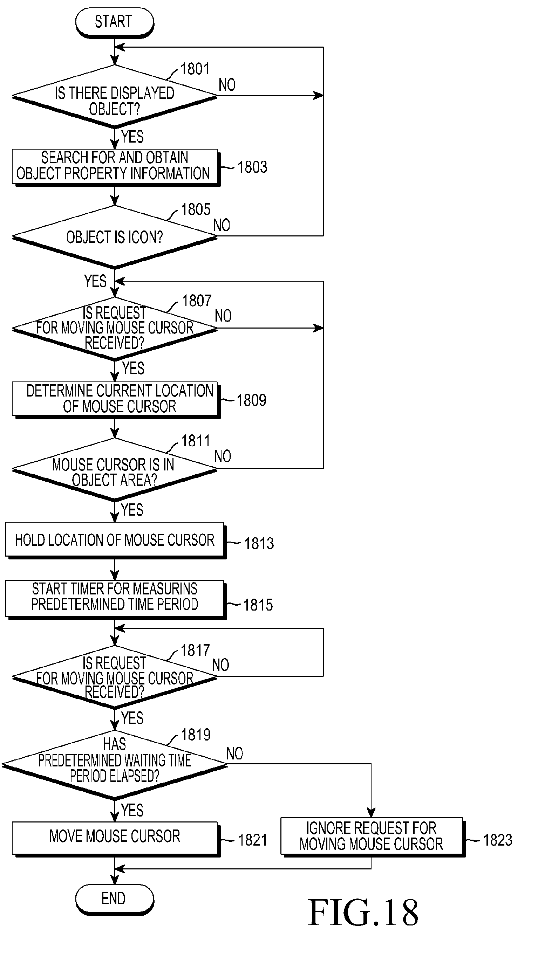

FIG. 18 is a flowchart of an example of yet another process, according to aspects of the disclosure. In operation 1801, the first controller 401 may determine whether there is a displayed object on the first display unit 1403. If the first controller 401 determines that there is a displayed object, the process may proceed to operation 1803. Otherwise, operation 1801 may be repeated.

In operation 1803, the first controller 401 may search the first memory unit 407 for object property information corresponding to the displayed object. In operation 1805, the first controller 401 may determine whether the object is an icon or an object including an indicator, based on the object property information.

For example, the object property information may include information representing one or more characteristics of the object. If the object includes an indicator, the object property information may include indicator information related to the indicator. The indicator information may include coordinate information of the indicator, and a reference movement distance corresponding to the indicator. If the object property information includes indicator information, the first controller 401 may determine that the object is an object including an indicator, and if the object property information includes no indicator information, the first controller 401 may determine that the object is an icon.

For example, if the first controller 401 determines that the object is an icon, the process may proceed to operation 1807. Otherwise, the process may proceed to operation 1801.

In operation 1807, the first controller 401 may determine whether a request for moving the mouse cursor is received. In some implementations, the request may be a mouse or air mouse signal. For example, if a request for moving the mouse cursor has been received, the process may proceed to operation 1809. Otherwise, operation 1807 may be repeated.

In operation 1809, the first controller 401 may move the mouse cursor according to the request and determine the current location of the mouse cursor. In operation 1811, the first controller 401 may determine whether the mouse cursor has entered the object area of the icon, based on the current location of the mouse cursor. For example, if the first controller 401 determines that the mouse cursor is in the object area of the icon, the process may proceed to operation 1813. Otherwise, the process may proceed to operation 1807. For example, the object area of the icon may be a predetermined area including the icon.

In operation 1813, the first controller 401 may hold the mouse cursor at its current location, and then proceed to operation 1815. For example, referring to FIG. 13, if the first controller 401 determines that the mouse cursor has been moved from the location 1301 to the location 1307 which is in the object area 1303 by a user after the object 1305 is displayed, the first controller 401 may set a movement velocity of the mouse cursor to "0" for a predetermined waiting time period in order to hold the mouse cursor for the predetermined waiting time period.

In operation 1815, the first controller 401 may start a timer that measures a predetermined waiting time period for which the mouse cursor is to be held still. For example, the predetermined waiting time period may be designated in advance.

In operation 1817, the first controller 401 may determine whether a request for moving the mouse cursor is received. In some implementations, the request may be a mouse signal or an air mouse signal. For example, if a request for moving the mouse cursor has been received, the process may proceed to operation 1819. Otherwise, operation 1817 may be repeated.

In operation 1819, the first controller 401 may determine whether the predetermined waiting time period has elapsed. For example, if the first controller 401 determines that the predetermined waiting time period has elapsed, the process may proceed to operation 1821. Otherwise, the process may proceed to operation 1823.

In operation 1821, the first controller 401 may move the mouse cursor according to the request for moving the mouse cursor. For example, if the first controller 401 determines that the predetermined waiting time period has elapsed, the first controller 401 may set the movement velocity of the mouse cursor to a reference velocity. If the first controller 401 determines that the mouse cursor is out of the object area 1303, the first controller 401 may move the mouse cursor at the reference velocity. For example, the reference velocity may be the velocity of the mouse cursor at the time the mouse cursor is moved in the object area 1303.

In operation 1823, the first controller 401 may hold the mouse cursor at its current location by ignoring the request for moving the mouse cursor.

FIGS. 17 and 18 relate to methods in which the first controller 401 of the electronic device changes a color or a movement velocity of a mouse cursor according to whether the mouse cursor has been moved in or out of an object area. However, the third controller 701 of the electronic device may perform the same methods as described above with reference to FIGS. 17 and 18.

FIGS. 17 and 18 relate to methods of changing a color or a movement velocity of a mouse cursor according to whether the mouse cursor has been moved in or out of an object area. However, it is also possible to change another property of the mouse cursor. For example, the electronic device may change a pattern, a texture, or a size of a mouse cursor when the mouse cursor has been moved in or out of an object area. However, these are exemplary embodiments, and other embodiments are also possible.

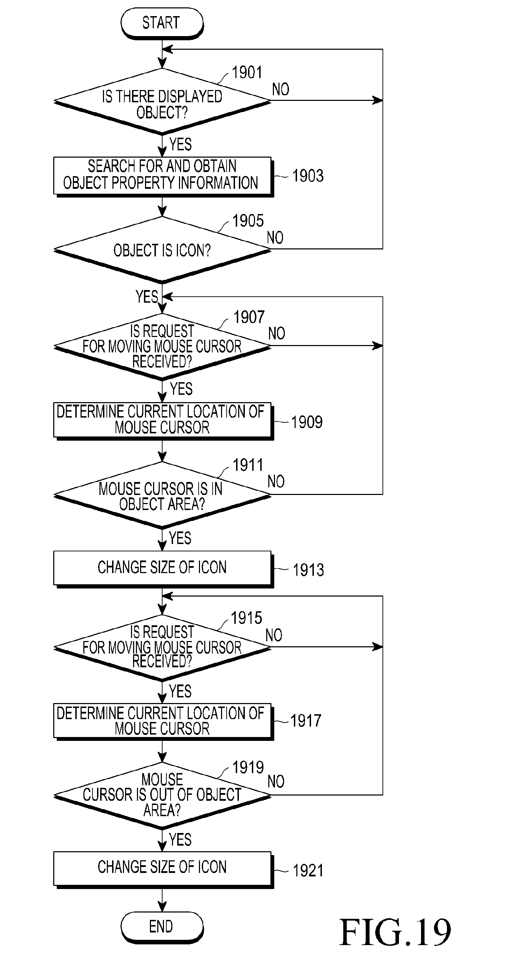

FIG. 19 is a flowchart of an example of yet another process, according to aspects of the disclosure. In operation 1901, the first controller 401 may determine whether there is a displayed object on the first display unit 403. For example, if the first controller 401 determines that there is a displayed object, the process may proceed to operation 1903. Otherwise, operation 1901 may be repeated.

In operation 1903, the first controller 401 may search the first memory unit 407 for object property information corresponding to the displayed object, and analyze the object property information. In operation 1905, the first controller 401 may determine whether the object is an icon or an object including an indicator, based on the object property information.

For example, the object property information may include information representing one or more properties of the object. If the object includes an indicator, the object property information includes indicator information related to the indicator. The indicator information may include coordinate information of the indicator, and a reference movement distance corresponding to the indicator. If the object property information includes indicator information, the first controller 401 may determine that the object is an object including an indicator, and if the object property information includes no indicator information, the first controller 401 may determine that the object is an icon.

If the first controller 401 determines that the object is an icon, the process may proceed to operation 1907. Otherwise, the process may return to operation 1901.

In operation 1907, the first controller 401 may determine whether a request for moving the mouse cursor is received. In some implementations, the request may include a mouse or air mouse signal. If a request for moving the mouse cursor has been received, the process may proceed to operation 1909. Otherwise, operation 1907 may be repeated.

In operation 1909, the first controller 401 may move the mouse cursor according to the request and determine the current location of the mouse cursor.

In operation 1911, the first controller 401 may determine whether the mouse cursor has entered the object area of the icon. For example, the object area of the icon may be a predetermined area including the icon. If the first controller 401 determines that the mouse cursor is in the object area of the icon, the process may proceed to operation 1913.

Otherwise, the process may proceed to operation 1907.

In operation 1913, the first controller 401 may change the size of the icon. For example, referring to FIG. 14, if the mouse cursor has been moved from the location 1401 to the location 1407 which is in the object area 1403 by a user after the object 1405 is displayed, the first controller 401 may display the object 1409 by enlarging the size of the object 1405. As another example, if the mouse cursor has been moved from the location 1401 to the location 1407 which is in the object area 1403 by a user after the object 1405 is displayed, the first controller 401 may display the object 1409 by reducing the size of the object 1405.

In operation 1915, the first controller 401 may determine whether a request for moving the mouse cursor is received. In some implementations, the request may be a mouse signal or an air mouse signal. For example, if a request for moving the mouse cursor has been received, the process may proceed to operation 1917. Otherwise, operation 1915 may be repeated.

In operation 1917, the first controller 401 may move the mouse cursor according to the request and determine the current location of the mouse cursor.

In operation 1919, the first controller 401 may determine whether the mouse cursor has exited the object area of the icon. If the first controller 401 determines that the mouse cursor is out of the object area of the icon, the process may proceed to operation 1921. Otherwise, the process may proceed to operation 1915.

In operation 1921, the first controller 401 may change the size of the icon. For example, if the first controller 401 determines that the mouse cursor out of an object area 1403, the first controller 401 may reduce the size of an object 1409 to the size of an object 1405. As another example, if the first controller 401 determines that the mouse cursor is out of the object area 1403, the first controller 401 may enlarge the size of the object 1409 to the size of the object 1405.

Meanwhile, FIG. 19 relates to a method in which the first controller 401 of the electronic device changes the size of an icon according to whether a mouse cursor has been moved in or out of an object area. However, the third controller 701 of the electronic device may perform the same method as described above with reference to FIG. 19.

FIG. 19 relates to a method of changing the size of an object according to whether a mouse cursor has been moved in or out of the corresponding object area. However, it is also possible to change another property of the object. For example, the electronic device may change a pattern, a texture, or a color of an object when a mouse cursor has been moved in or out of the corresponding object area. However, these are exemplary embodiments, and other embodiments are also possible.

Therefore, according to the apparatus and method for providing a mouse cursor in an electronic device, as described above, a user can easily select an icon. Also, according to the apparatus and method for providing a mouse cursor in an electronic device, as described above, a user can easily select a predetermined location on an indicator in an object including the indicator.

The processes provided with respect to FIGS. 8, 9, and 15-19 are provided as examples only. At least some of the operations in any of these processes can be performed concurrently, in a different order, or altogether omitted. Although the processes provided with respect to FIGS. 8, 9, and 15-19 are discussed as being performed by the first controller 401, in other examples they can be performed by the controller 701, and/or any other suitable device (or component thereof).

The above-described aspects of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

While the disclosure has been shown and described with reference to specific exemplary aspects such as a mobile communication terminal, it will be understood by those skilled in the art that various changes in form and details may be made therein without departing from the scope of the disclosure as defined by the appended claims and their equivalents. For example, the present disclosure can use other short-range communication methods than Bluetooth communication described above.

Aspects of the invention are also apparent from the attached clauses.

Clause 1. An electronic device comprising:

a first communication unit configured to communicate with an external input device;
a second communication unit configured to communicate with an external display device; and
a controller connected to the first communication unit and the second communication unit,
wherein the controller receives information representing at least one of orientation of the external input device and a change in the orientation from the first communication unit, and transmits a signal for controlling a cursor that is displayed on the external display device, to the external display device, through the second communication unit, the signal generated based on the information.

Clause 2. The electronic device of clause 1, wherein the first communication unit supports Bluetooth communication.
Clause 3. The electronic device of clause 1, wherein the second communication unit supports High Definition Multimedia Interface (HDMI) communication.
Clause 4. The electronic device of clause 1, wherein if the cursor has been moved in a predetermined area displayed on the external display device, the controller ignores at least one of the orientation and the change in the orientation to move the cursor.
Clause 5. The electronic device of clause 4, wherein the predetermined area includes a clickable icon.
Clause 6. The electronic device of clause 5, wherein if the cursor is located in the predetermined area, the controller automatically moves the cursor onto the icon.
Clause 7. The electronic device of clause 5, wherein if the cursor is located in the predetermined area, the controller automatically moves the cursor onto a center of the icon.
Clause 8. The electronic device of clause 1, wherein if the cursor is located in the predetermined area, the controller changes at least one of a color, a size, a movement velocity, and a texture of the cursor.
Clause 9. The electronic device of 1, wherein if the cursor is located in the predetermined area, the controller changes at least one of a color, a size, and a texture of the predetermined area.
Clause 10. The electronic device of clause 1, wherein if the cursor is located in the predetermined area, the controller changes at least one of a color, a size, and a texture of an icon included in the predetermined area.
Clause 11. A method for providing a mouse cursor in an electronic device, comprising:

determining whether the mouse cursor is in a predetermined area displayed on a display unit; and
changing a display of the predetermined area if the cursor is in the predetermined area.

Clause 12. The method of clause 11, wherein the changing of the display of the predetermined area comprises changing a color of the predetermined area.
Clause 13. The method of clause 11, wherein the changing of the display of the predetermined area comprises changing a texture of the predetermined area.
Clause 14. The method of clause 11, wherein the changing of the display of the predetermined area comprises changing a size of the predetermined area.
Clause 15. A method for providing a mouse cursor in an electronic device, comprising:

determining whether the mouse cursor is in an area of a predetermined object displayed on a display unit; and
changing a display of the predetermined object if the mouse cursor is in the area of the predetermined object.

Clause 16. The method of clause 15, wherein the changing of the display of the predetermined area comprises changing at least one of a color, a size, and a texture of the predetermined area.
Clause 17. A method of providing a mouse cursor in an electronic device, comprising:

determining whether the mouse cursor is in an area of a predetermined object displayed on a display unit; and
changing a display of the mouse cursor if the mouse cursor is in the area of the predetermined object.

Clause 18. The method of clause 17, wherein the changing of the display of the predetermined area comprises changing at least one of a color and a movement velocity of the mouse cursor.
Clause 19. The method of clause 17, wherein the changing of the display of the cursor comprises holding the mouse cursor for a predetermined waiting time period at a predetermined location in the area of the predetermined object.

**Claims**

1. An apparatus for providing a mouse cursor in an electronic device, comprising:

a controller configured to:

determine, based on object property information of the displayed object, whether a displayed object is an icon or an object including an indicator,
determine whether a mouse cursor is in an object area of the displayed object if the displayed object is an icon or an object including an indicator,
move the mouse cursor to a reference location of the object if the mouse cursor is in the object area of the displayed object.

2. The apparatus of claim 1, wherein the controller is further configured to, if the object is an icon,
measure a predetermined waiting time period,
determine whether a request for moving the mouse cursor is received,
determine whether the predetermined waiting time period has elapsed if the request for moving the mouse cursor has been received, and
hold the mouse cursor at the reference location by ignoring the request for moving the mouse cursor if the predetermined waiting time period has not elapsed.

3. The apparatus of claim 2, wherein if the predetermined waiting time period has elapsed, the controller moves the mouse cursor according to the request for moving the mouse cursor.

4. The apparatus of any one of the previous claims, wherein if the object property information includes no indicator information, the controller determines that the displayed object is the icon.

5. The apparatus of any one of the previous claims, wherein the reference location is the central point of the displayed object.

6. The apparatus of claim 1, wherein the controller is further configured to, if the object is an object including an indicator,
determine whether a request for moving the mouse cursor is received,
compare a movement distance of the mouse cursor according to the request for moving the mouse cursor to a reference movement distance if the request for moving the mouse cursor has been received, and
move the mouse cursor along the indicator if it is determined that the movement distance of the mouse cursor is shorter than the reference movement distance based on the result of the comparison.

7. The apparatus of claim 6, wherein if the movement distance of the mouse cursor is equal to or longer than the reference movement distance, the controller moves the mouse cursor from the predetermined location to a second location.

8. The apparatus of claim 6 or 7, wherein if the object property information includes indicator information, the controller determines that the displayed object is the object including the indicator.

9. The apparatus of any one of the claims 6-8, wherein the predetermined location is a location having the shortest distance to the first location of the mouse cursor on the indicator.

10. The apparatus of any one of the claims 6-9, wherein the indicator is one of a linear path indicator and a trajectory path indicator.

11. A method for providing a mouse cursor in an electronic device, comprising:

determining, based on object property information of the displayed object, whether a displayed object is an icon or an object including an indicator;
determining whether a mouse cursor is in an object area of the displayed object if the displayed object is an icon or an object including an indicator, and moving the mouse cursor to a reference location of the object if the mouse cursor is in the object area of the displayed object.

**12.** The method of claim 11, further comprising, if the object is an icon:

measuring a predetermined waiting time period, determining whether a request for moving the mouse cursor is received, and determining whether the predetermined waiting time period has elapsed if the request for moving the mouse cursor has been received; and
holding the mouse cursor at the reference location by ignoring the request for moving the mouse cursor if the predetermined waiting time period has not elapsed.

**13.** The method of claim 12, further comprising moving the mouse cursor according to the request for moving the mouse cursor if the predetermined waiting time period has elapsed.

**14.** The method of claim 12 or 13, wherein the determining of whether the displayed object is the icon comprises determining that the displayed object is the icon if the object property information includes no indicator information.

**15.** The method of any one of the claims 12-14, wherein the reference location is the central point of the displayed object.

**16.** The method of claim 12, further comprising, if the object is an object including an indicator:

determining whether a request for moving the mouse cursor is received, and comparing a movement distance of the mouse cursor according to the request for moving the mouse cursor to a reference movement distance if the request for moving the mouse cursor has been received; and
moving the mouse cursor along the indicator if it is determined that the movement distance of the mouse cursor is shorter than the reference movement distance based on the result of the comparison.

**17.** The method of claim 16, further comprising moving the mouse cursor from the predetermined location to a second location if the movement distance of the mouse cursor is equal to or longer than the reference movement distance.

**18.** The method of claim 16 or 17, wherein the determining of whether the displayed object is the object including the indicator comprises determining that the displayed object is the object including the indicator if the object property information includes indicator information.

**19.** The method of any one of claims 16-18, wherein the predetermined location is a location having the shortest distance to the first location of the mouse cursor on the indicator.

**20.** The method of any one of claims 16-19, wherein the indicator is one of a linear path indicator and a trajectory path indicator.

FIG.1

FIG.2

**FIG.3**

**FIG.4**

FIG.5

EP 2 770 413 A2

FIG.6

FIG.7

START

801
IS THERE DISPLAYED OBJECT? — NO →

↓ YES

SEARCH FOR AND OBTAIN OBJECT PROPERTY INFORMATION — 803

805
OBJECT IS ICON? — NO →

↓ YES

807
IS REQUEST FOR MOVING MOUSE CURSOR RECEIVED? — NO →

↓ YES

DETERMINE CURRENT LOCATION OF MOUSE CURSOR — 809

811
MOUSE CURSOR IS IN OBJECT AREA? — NO →

↓ YES

MOVE MOUSE CURSOR TO PREDETERMINED LOCATION IN OBJECT AREA — 813

START TIMER FOR MEASURINS PREDETERMINED WAITING TIME PERIOD — 815

817
IS REQUEST FOR MOVING MOUSE CURSOR RECEIVED? — NO →

↓ YES

819
HAS PREDETERMINED WAITING TIME PERIOD ELAPSED? — NO →

↓ YES

MOVE MOUSE CURSOR — 821    IGNORE REQUEST FOR MOVING MOUSE CURSOR — 823

END

FIG.8

START

901
IS THERE DISPLAYED
OBJECT? — NO

↓ YES

SEARCH FOR AND OBTAIN
OBJECT PROPERTY INFORMATION — 903

905
DOES
OBJECT INCLUDE AN
INDICATOR? — NO

↓ YES

907
IS REQUEST
FOR MOVING MOUSE CURSOR
RECEIVED? — NO

↓ YES

DETERMINE CURRENT LOCATION OF
MOUSE CURSOR — 909

911
MOUSE
CURSOR IS IN OBJECT
AREA? — NO

↓ YES

MOVE MOUSE CURSOR TO PREDETERMINED
LOCATION IN SECOND OBJECT AREA — 913

915
IS REQUEST
FOR MOVING MOUSE CURSOR
RECEIVED? — NO

↓ YES

CALCULATE MOVEMENT
DISTANCE OF MOUSE CURSOR — 917

919
IS MOVEMENT
DISTANCE OF MOUSE CURSOR
EQUAL TO OR LONGER THAN REFERENCE
MOVEMENT DISTANCE? — NO

↓ YES

MOVE MOUSE CURSOR
ACCORDING TO REQUEST — 921

MOVE MOUSE CURSOR
ALONG INDICATOR — 923

END

FIG.9

FIG.10

FIG.11

1203

1205

1203

1205

1207

1201

# FIG.12

1303

1305

1303

1305

1307

1301

# FIG.13

FIG.14

START

IS THERE DISPLAYED OBJECT? — 1501
NO

YES

SEARCH FOR AND OBTAIN OBJECT PROPERTY INFORMATION — 1503

OBJECT IS ICON? — 1505
NO

YES

IS REQUEST FOR MOVING MOUSE CURSOR RECEIVED? — 1507
NO

YES

DETERMINE CURRENT LOCATION OF MOUSE CURSOR — 1509

MOUSE CURSOR IS IN OBJECT AREA? — 1511
NO

YES

CHANGE COLOR OF OBJECT AREA — 1513

IS REQUEST FOR MOVING MOUSE CURSOR RECEIVED? — 1515
NO

YES

DETERMINE CURRENT LOCATION OF MOUSE CURSOR — 1517

MOUSE CURSOR IS OUT OF OBJECT AREA? — 1519
NO

YES

CHANGE COLOR OF OBJECT AREA — 1521

END

FIG.15

START

1601
IS THERE DISPLAYED OBJECT? — NO

YES

SEARCH FOR AND OBTAIN OBJECT PROPERTY INFORMATION — 1603

1605
OBJECT IS ICON? — NO

YES

1607
IS REQUEST FOR MOVING MOUSE CURSOR RECEIVED? — NO

YES

DETERMINE CURRENT LOCATION OF MOUSE CURSOR — 1609

1611
MOUSE CURSOR IS IN OBJECT AREA? — NO

YES

CHANGE SIZE OF OBJECT AREA — 1613

1615
IS REQUEST FOR MOVING MOUSE CURSOR RECEIVED? — NO

YES

DETERMINE CURRENT LOCATION OF MOUSE CURSOR — 1617

1619
MOUSE CURSOR IS OUT OF OBJECT AREA? — NO

YES

CHANGE SIZE OF OBJECT AREA — 1621

END

FIG.16

START

1701
IS THERE DISPLAYED OBJECT? —NO→

↓YES

SEARCH FOR AND OBTAIN OBJECT PROPERTY INFORMATION — 1703

1705
OBJECT IS ICON? —NO→

↓YES

1707
IS REQUEST FOR MOVING MOUSE CURSOR RECEIVED? —NO→

↓YES

DETERMINE CURRENT LOCATION OF MOUSE CURSOR — 1709

1711
MOUSE CURSOR IS IN OBJECT AREA? —NO→

↓YES

CHANGE COLOR OF OBJECT AREA — 1713

1715
IS REQUEST FOR MOVING MOUSE CURSOR RECEIVED? —NO→

↓YES

DETERMINE CURRENT LOCATION OF MOUSE CURSOR — 1717

1719
MOUSE CURSOR IS OUT OF OBJECT AREA? —NO→

↓YES

CHANGE COLOR OF MOUSE CURSOR — 1721

END

FIG.17

START

IS THERE DISPLAYED OBJECT? — 1801
 NO →
 ↓ YES

SEARCH FOR AND OBTAIN OBJECT PROPERTY INFORMATION — 1803

OBJECT IS ICON? — 1805
 NO →
 ↓ YES

IS REQUEST FOR MOVING MOUSE CURSOR RECEIVED? — 1807
 NO →
 ↓ YES

DETERMINE CURRENT LOCATION OF MOUSE CURSOR — 1809

MOUSE CURSOR IS IN OBJECT AREA? — 1811
 NO →
 ↓ YES

HOLD LOCATION OF MOUSE CURSOR — 1813

START TIMER FOR MEASURINS PREDETERMINED TIME PERIOD — 1815

IS REQUEST FOR MOVING MOUSE CURSOR RECEIVED? — 1817
 NO →
 ↓ YES

HAS PREDETERMINED WAITING TIME PERIOD ELAPSED? — 1819
 NO →
 ↓ YES

MOVE MOUSE CURSOR — 1821    IGNORE REQUEST FOR MOVING MOUSE CURSOR — 1823

END

FIG.18

START

1901 — IS THERE DISPLAYED OBJECT? — NO

YES

SEARCH FOR AND OBTAIN OBJECT PROPERTY INFORMATION — 1903

1905 — OBJECT IS ICON? — NO

YES

1907 — IS REQUEST FOR MOVING MOUSE CURSOR RECEIVED? — NO

YES

DETERMINE CURRENT LOCATION OF MOUSE CURSOR — 1909

1911 — MOUSE CURSOR IS IN OBJECT AREA? — NO

YES

CHANGE SIZE OF ICON — 1913

1915 — IS REQUEST FOR MOVING MOUSE CURSOR RECEIVED? — NO

YES

DETERMINE CURRENT LOCATION OF MOUSE CURSOR — 1917

1919 — MOUSE CURSOR IS OUT OF OBJECT AREA? — NO

YES

CHANGE SIZE OF ICON — 1921

END

FIG.19